(19) Europäisches Patentamt
European Patent Office
Office européen des brevets

(11) **EP 4 194 414 B1**

(12) **EUROPÄISCHE PATENTSCHRIFT**

(45) Veröffentlichungstag und Bekanntmachung des Hinweises auf die Patenterteilung:
**07.08.2024 Patentblatt 2024/32**

(21) Anmeldenummer: **22210932.4**

(22) Anmeldetag: **01.12.2022**

(51) Internationale Patentklassifikation (IPC):
*C03C 3/085* (2006.01)    *C03C 3/087* (2006.01)
*C03C 3/093* (2006.01)    *C03C 3/097* (2006.01)
*C03C 10/00* (2006.01)    *C03C 21/00* (2006.01)

(52) Gemeinsame Patentklassifikation (CPC):
**C03C 3/085; C03C 3/087; C03C 3/093; C03C 3/097; C03C 10/0027; C03C 21/002**

(54) **DECKSCHEIBE MIT ANOMALEM SPANNUNGSPROFIL, VERFAHREN ZU DEREN HERSTELLUNG SOWIE DEREN VERWENDUNG**

COVER PANE WITH AN ANOMALOUS STRESS PROFILE, METHOD FOR ITS PRODUCTION AND ITS USE

PLAQUE DE RECOUVREMENT PRÉSENTANT UN PROFIL DE CONTRAINTE ANORMAL, SON PROCÉDÉ DE FABRICATION ET SON UTILISATION

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **10.12.2021 DE 102021132738**
**03.06.2022 DE 102022114184**

(43) Veröffentlichungstag der Anmeldung:
**14.06.2023 Patentblatt 2023/24**

(73) Patentinhaber:
• **SCHOTT AG**
**55122 Mainz (DE)**
• **SCHOTT Technical Glass Solutions GmbH**
**07745 Jena (DE)**

(72) Erfinder:
• **MÜLLER, Dr. Lars**
**65201 Wiesbaden (DE)**
• **DIETRICH, Dr. Rüdiger**
**07745 Jena (DE)**
• **PFEIFFER, Dr. Thomas**
**55218 Ingelheim (DE)**
• **KOCH, Julian**
**55131 Mainz (DE)**
• **RÜDINGER, Bernd Dr.**
**55286 Wörrstadt (DE)**
• **SCHNEIDER, Meike Dr.**
**65232 Taunusstein (DE)**
• **ALKEMPER, Dr. Jochen**
**55270 Klein-Winternheim (DE)**

(74) Vertreter: **Blumbach · Zinngrebe Patentanwälte PartG mbB**
**Alexandrastraße 5**
**65187 Wiesbaden (DE)**

(56) Entgegenhaltungen:
**EP-A1- 3 838 858**    **WO-A1-2013/171047**
**CN-A- 113 754 289**    **US-A1- 2020 207 660**

**Beschreibung**

Gebiet der Erfindung

Die Erfindung betrifft allgemein Deckscheiben, insbesondere Deckscheiben für elektronische Anzeigegeräte. Weiterhin betrifft die Erfindung ein Verfahren zur Herstellung einer solchen Deckscheibe sowie deren Verwendung.

Hintergrund der Erfindung

Deckscheiben für elektronischen Anzeigegeräte, die beispielsweise auch als Cover, Coverglas oder Abdeckgläser bezeichnet werden, sind bereits seit langem bekannt, dienen der Abdeckung unter ihnen liegender elektronischer Komponenten und weiterhin als Sichtscheibe und sind heute in der Regel meist in der Form aufgebaut, dass sie eine chemisch vorgespannte Glasscheibe umfassen. Die Glasscheibe weist meist eine nur sehr geringe Dicke von unter 1 mm auf und kann auch bedeutend dünner sein, da auf diese Weise das Gewicht des mit einer solchen Deckscheibe ausgerüsteten Anzeigegeräts (wie beispielsweise einem Smartphone oder sonst einem tragbaren elektronischen Gerät) möglichst geringgehalten wird. Aufgrund der nur sehr geringen Dicke ist die mechanische Festigkeit des Glases reduziert, sodass es, wie auch vorstehend ja bereits ausgeführt, notwendig ist, das Glas durch eine entsprechende Behandlung mechanisch zu stärken. Dies erfolgt bei den adressierten dünnen Gläsern des Standes der Technik in einem chemischen Vorspannprozess, bei welchem die Glasscheibe in ein Tauchbad umfassend eine Salzschmelze getaucht wird. Im Rahmen der vorliegenden Offenbarung wird das Tauchbad synonym auch als Tauschbad bezeichnet, da beim Eintauchen in das Bad mit der Salzschmelze ein Ionenaustausch stattfindet. Auf diese Weise werden kleinere Kationen, welche sich im Glas der Glasscheibe befinden, durch die größeren Kationen des Tauschbades ausgetauscht.

Beispielsweise ist es bekannt, Natrium-Ionen durch Kalium-Ionen auszutauschen. Die Kalium-Ionen erzeugen aufgrund ihrer Größe eine Druckspannung im ausgetauschten oberflächennahen Bereich der Glasscheibe, welche durch eine Zugspannung im Innern der Glasscheibe ausgeglichen wird. Insgesamt wird damit die Widerstandsfähigkeit der Glasscheibe gegen mechanische Belastung erhöht.

Ebenfalls ist es bekannt, dass auch Glaskeramiken einer chemischen Vorspannung zugänglich sein können. Der oben beschriebene Austauschmechanismus gilt dabei prinzipiell auch für Glaskeramiken. Unter Glaskeramiken werden dabei im Rahmen der vorliegenden Offenbarung allgemein Materialien verstanden, welche aus einem Grünglas einer kontrollierten oder zumindest kontrollierbaren Kristallisation unterzogen werden, sodass ein Gefüge umfassend kleine Kristalle (oder synonym Kristallite) mit einer recht homogenen Größenverteilung resultiert, wobei die Kristalle bzw. Kristallite) eine mittlere Größe von vorzugsweise 2 μm nicht überschreiten.

Solche Glaskeramiken können im Vergleich mit chemisch vorspannbaren oder chemisch vorgespannten Gläsern vorteilhaft sein, weil die Glaskeramiken in der Regel durch ihre spezielle Mikrostruktur, nämlich umfassend Kristallite, eine größere mechanischere Beständigkeit aufweisen können. In der Regel lassen sich allerdings solche Glaskeramiken nicht in den geringen Dicken herstellen, wie dies für Gläser möglich ist. Damit ist die Verwendung von Glaskeramiken als Material einer Deckscheibe möglicherweise unter dem Gesichtspunkt des resultierenden Gewichts eines tragbaren Anzeigegeräts nicht besonders vorteilhaft.

In chemisch vorgespannten Gläsern bzw. Glasscheiben folgt das mittels Ionenaustausch erhaltene Spannungsprofil für einen einfachen Ionenaustausch - also dem Tausch eines kleineren Kations, wie beispielsweise von $Na^+$, gegen ein größeres, wie $K^+$ - näherungsweise einer sogenannten komplementären Fehlerfunktion bzw. kann die erhaltene Spannungskurve näherungsweise durch eine solche komplementäre Fehlerfunktion beschrieben werden.

Allerdings hat sich gezeigt, dass ein solcher Verlauf des Spannungsprofils ungünstig sein kann. Denn in einem solchen typischen Vorspannungsprofil fällt die Spannung von der Oberfläche zum Innern des Glasartikels stark ab. Dies ist gerade bei Einwirkung von stumpfen oder glatten Oberflächen kritisch (sogenannte "blunt-impact-Belastungen"), da es hier zu einer Biegebelastung kommt, die zum Aufweiten von lateralen Rissen führen kann. Eine sehr hohe Druckspannung in der Oberfläche über eine kritische Tiefe hinweg kann hier vorteilhaft sein, um dieser Rissaufweitung entgegenzuwirken.

Hierzu ist es vorteilhaft, wenn an der Oberfläche der Deckscheibe eine möglichst hohe Druckspannung eingestellt wird, sodass der steile Abfall der Druckspannung dennoch zu einer ausreichenden "DOL" (Tiefe der Druckspannungszone oder "depth of layer") führt. Im Rahmen der vorliegenden Offenbarung wird die Druckspannungszone als "DOL" oder - insoweit korrekter - als "Depth of Compression Layer", DoCL, bezeichnet. Auch dies kann aber nachteilig sein. Denn wie ausgeführt wird die in der Oberfläche der Deckscheibe erzeugte Druckspannung durch Zugspannung in Inneren der Deckscheibe kompensiert. Je höher die Druckspannung im oberflächennahen Bereich der Deckscheibe ist, desto höher ist auch die gespeicherte Zugspannung in deren Innern. Somit kann bei sehr hoher Druckspannung im oberflächennahen Bereich der negative Effekt auftreten, dass es bei entsprechender Belastung durch die hohe gespeicherte Zugspannung zum Bruch mit dem Auftreten einer großen Anzahl kleiner Glassplitter kommt. Dies ist gerade für eine Deckscheibe eines Anzeigegeräts ungünstig, denn durch viele kleine Splitter wird die Durchsicht durch eine Scheibe auf ein dahinterliegendes Display deutlich mehr erschwert als beim Auftreten nur weniger großer Bruchstücke. Dieses Bruchversagen sollte deshalb möglichst unterbleiben bzw. erst bei sehr hohen Belastungen auftreten.

Die Druckschrift WO2013/171047 A1 offenbart eine Deckscheibe für ein Gehäuse für ein elektronisches Gerät, umfassend eine chemisch vorgespannte LAS-Keatit-Glaskeramik. Das Grünglas weist folgende Zusammensetzung auf (Gew%): $Li_2O$ 3.75, $Na_2O$ 0.16, $K_2O$ 0.2, $MgO$ 1.06, $BaO$ 0.84, $ZnO$ 1.60, $Al_2O_3$ 19.95, $SiO_2$ 67.35, $TiO_2$ 2.35, $ZrO_2$ 1.80, $As_2O_3$ 0.86, $Nd_2O_3$ 0.06, $Fe_2O_3$ 0.014.

Es besteht daher ein Bedarf an Deckscheiben, welche über eine ausreichend tiefe Druckspannungszone verfügen, sodass eine Biegebelastung erst bei sehr hohen Belastungen zu einem mechanischen Versagen der Deckscheibe führt.

### Aufgabe der Erfindung

Die Aufgabe der Erfindung besteht in der Bereitstellung von Deckscheiben, welche die vorgenannten Probleme des Standes der Technik zumindest vermindern. Weitere Aspekte der Erfindung betreffen ein Verfahren zum Herstellen einer solchen Deckscheibe sowie die Verwendung einer solchen.

### Zusammenfassung der Erfindung

Die Aufgabe der Erfindung wird gelöst durch den Gegenstand der unabhängigen Ansprüche. Bevorzugte und spezielle Ausführungsformen finden sich in den abhängigen Ansprüchen, der Beschreibung und den Zeichnungen der Offenbarung.

Die Erfindung betrifft damit eine Deckscheibe mit einer Dicke zwischen 0,1 mm und 2 mm, umfassend eine silikatische Glaskeramik, wobei die silikatische Glaskeramik als Hauptkristallphase Keatitmischkristall umfasst. Die Deckscheibe liegt chemisch vorgespannt vor und weist eine Oberflächendruckspannung von wenigstens 250 MPa und vorzugsweise höchstens 1500 MPa auf, wobei das Spannungsprofil, vorzugsweise in einer Tiefe der Deckscheibe von mehr als 10 $\mu$m, wenigstens einen Wendepunkt aufweist, wobei die Deckscheibe einen Lichttransmissionsgrad, $\tau_{vis}$, von mehr als 80%, im Bereich von 380 nm bis 780 nm, bestimmt für Dicken von 0,4 mm bis 0,85 mm, insbesondere vorzugsweise bei einer Dicke von 0,7 mm, aufweist, wobei die Glaskeramik $SnO_2$, $TiO_2$ und/oder $ZrO_2$ umfasst, gekennzeichnet dadurch, dass für die Komponenten $SnO_2$, $ZrO_2$ und $TiO_2$ gilt: $0{,}01 \leq SnO_2/(ZrO_2+TiO_2) < 0{,}7$.

Eine bevorzugte Untergrenze der Dicke kann allgemein bei 0,4 mm liegen. Eine bevorzugte Obergrenze der Dicke kann allgemein bei 0,85 mm liegen.

Eine solche Ausgestaltung ist sehr vorteilhaft.

Die Deckscheibe umfasst eine silikatische Glaskeramik und liegt damit chemisch bereits als sehr resistentes Bauteil vor. Unter einer silikatischen Glaskeramik wird im Rahmen der vorliegenden Offenbarung eine Glaskeramik verstanden, welche $SiO_2$ umfasst und vorzugsweise eine Kristallphase, welche als einen strukturellen Baustein ein $SiO_4^{4-}$-Tetraeder, also ein sogenanntes kristallines Silikat beinhaltet. Eine silikatische Glaskeramik bringt inhärent bereits eine gute mechanische Beständigkeit mit sich, wobei allerdings bei unterschiedlichen Festigkeitsanforderungen diese gute mechanische Festigkeit einer Glaskeramik im Vergleich zum korrespondierenden Grünglas möglicherweise nicht so ausgeprägt ist wie bei bekannten in der Glasindustrie angegebenen Festigkeiten wie der Biegefestigkeit oder der Stoßfestigkeit. Weiterhin liegt die Deckscheibe chemisch vorgespannt vor, nämlich aufweisend eine CS (Druckspannung) von wenigstens 250 MPa und vorzugsweise höchstens 1500 MPa. Auf diese Weise sind vorteilhafte Eigenschaften der Deckscheibe hinsichtlich der mechanischen Anwendungstests, wie beispielsweise sogenannter "Set-Drop-Tests", die das Verhalten der Deckscheibe im in ein Gerät eingebauten Zustand betreffen, und/oder auch in Kugelfalltests, welche die Festigkeit gegenüber der Einwirkung stumpfer Gegenstände bzw. glatter Oberflächen angeben, erzielbar, sodass es möglich ist, hinreichend dünne und mithin auch leichte Deckscheiben zu verwenden. Die Deckscheibe weist daher eine Dicke von 0,1 mm bis 2 mm auf. Eine bevorzugte Untergrenze der Dicke kann allgemein bei 0,4 mm liegen. Eine bevorzugte Obergrenze der Dicke kann allgemein bei 0,85 mm liegen.

Überraschenderweise hat sich gezeigt, dass für Deckscheiben nach Ausführungsformen allgemein ein Spannungsprofil erhalten werden kann, welches vorzugsweise in einer Tiefe der Deckscheibe von mehr als 10 $\mu$m wenigstens einen Wendepunkt aufweist. Der Wendepunkt im Spannungsprofil kann dabei an einer beliebigen Stelle liegen, beispielsweise auch im Bereich der Zugspannung (also unterhalb der DoCL).

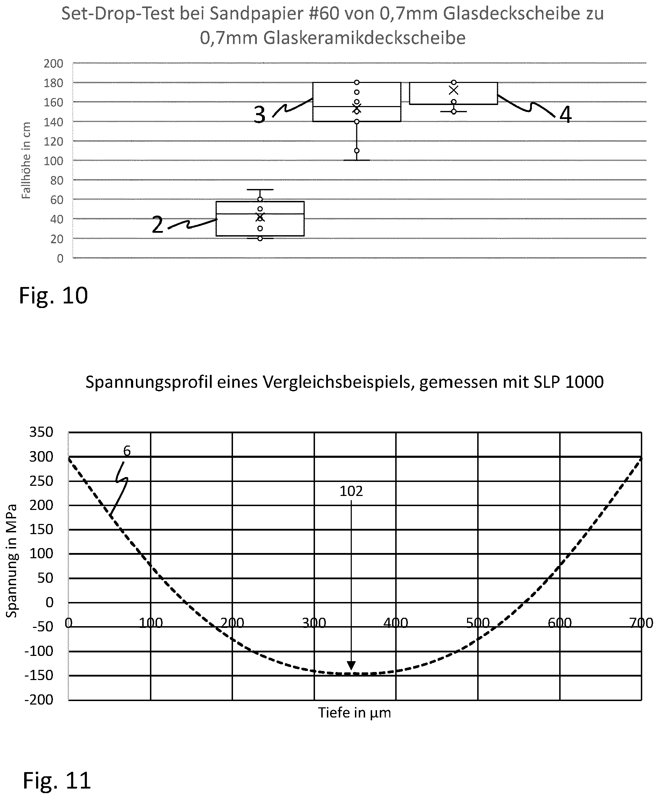

Dies ist überraschend, denn allgemein können Spannungsprofile in Deckscheiben in der Regel durch eine komplementäre Fehlerfunktion und/oder durch eine Parabel angenähert werden, weisen also mit anderen Worten die Form eines invertierten "halben S" auf, wie man in der beispielhaften Darstellung einer solchen üblichen Spannungsprofilkurve in Fig. 11 sehen kann. Einen Wendepunkt weisen solche Spannungsprofile nicht auf, zumindest nicht in der Deckscheibe selbst, also nicht in einer Tiefe von wenigstens 10 $\mu$m in der Deckscheibe. Ein übliches Spannungsprofil für eine chemisch vorgespannte Deckscheibe (also eine Deckscheibe, deren Vorspannung durch Ionenaustauschvorgänge erhalten wurde), zeigt einen schnellen Abfall der an der Oberfläche der Deckscheibe vorliegenden Druckspannung, welcher sich zum Innern der Deckscheibe hin langsam abflacht, entspricht damit zumindest in Teilbereichen der Darstellung einer komplementären Fehlerfunktion im ersten Quadranten des Koordinatensystems.

Ein solches Spannungsprofil ist zwar üblich, weist aber eben den Nachteil auf, dass bereits in geringer Tiefe der Deckscheibe eine wesentlich kleinere Druckspannung gegeben ist als an der Oberfläche der Deckscheibe. Dies führt dazu, dass Deckscheiben in der Regel auf sehr hohen Druckspannungen an der Oberfläche vorgespannt werden, beispielsweise über einen gemischten Austausch mittels Kalium- und Natriumionen, um auf diese Weise auch in relevanter Tiefe noch eine hohe Druckspannung zu erzeugen. Dies ist allerdings nachteilig, wenn auf diese Weise eine zu hohe Zugspannung in der Deckscheibe gespeichert wird, die bei Bruchversagen der Deckscheibe dann zu einem feinkrümeligen Bruchbild führt, was für eine Deckscheibe eines Anzeigegeräts prinzipiell ungünstig ist.

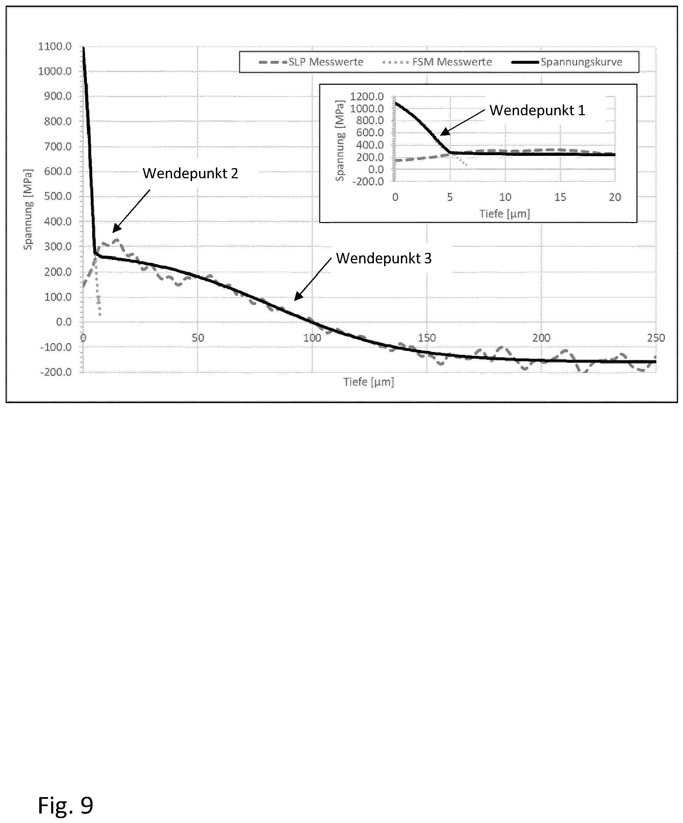

Wenn aber die Druckspannung an der Oberfläche ($CS_0$) und/oder die Druckspannungstiefe (DoCL) nicht beliebig erhöht werden können bzw. kann, ist es aber nunmehr, zumindest für Deckscheiben aus oder umfassend Glaskeramik und unter bestimmten Bedingungen, möglich, den Spannungsprofilverlauf so zu verändern, dass der Abfall der Spannungskurve möglichst lange verzögert wird. Das führt am Anfang des Spannungsprofils - im Gegensatz zu herkömmlichen Verläufen, die, wie vorstehend ausgeführt, in Teilen etwa durch eine komplementäre Fehlerfunktion und/oder durch eine Parabel angenähert oder beschrieben werden können - zu einem Spannungsplateau ähnlichem Bereich hoher Vorspannung, dem ein relativ starker Abfall der Spannungskurve folgt (sigmoidaler Verlauf), bis der Wendepunkt erreicht ist, siehe beispielsweise Fig. 9). Kurzum, dieser Profilverlauf führt zu einer Steigerung der Druckspannung und damit auch der Zugspannung durch unterschiedlichen Kurvenverlauf, bei gleichbleibender $CS_0$ und DoCL. Diese erhöhte Druckspannung im vorderen "Plateaubereich" weist Vorteile bei blunt-impact-Festigkeit (z.B. in einem sogenannten Kugelfalltest) auf, da durch den Impakt entstehende Risse im Oberflächenbereich wirksamer gestoppt werden können bzw. die Gegenkraft zur Rissproliferation größer ist.

Hier bieten die Deckscheiben nach der vorliegenden Offenbarung einen Vorteil, weil das Spannungsprofil so ausgestaltet ist, dass es, vorzugsweise in einer Tiefe der Deckscheibe von mehr als 10 $\mu$m, wenigstens einen Wendepunkt aufweist. Beispielsweise kann das Spannungsprofil der Deckscheibe nach der Offenbarung einen im Gegensatz zu den klassischen, eher "konkaven" Spannungsprofilen der Deckscheiben des Standes der Technik "konvex" ausgebildet sein. Unter "konvex" wird hier allgemein eine Form verstanden, welche eine nach "oben" gewölbte Form hat. "Nach oben" bezieht sich hier auf Druckspannungswerte in üblichen Spannungsprofilen, bei welchem in einem Koordinatensystem die Druckspannung nach "oben", also in positiver y-Richtung, über x, nämlich die Dicke der Deckscheibe, aufgetragen wird.

Allgemein bieten solche anomalen Spannungsprofile, die, vorzugsweise in einer Tiefe der Deckscheibe von mehr als 10 $\mu$m, wenigstens einen Wendepunkt aufweisen, den Vorteil, dass auf diese Weise eine relativ große DoCL erzielt werden kann, ohne dass gleichzeitig eine sehr hohe Oberflächendruckspannung vorliegen muss. Die relativ große DoCL bei gleichzeitig nicht zu hoher Druckvorspannung an der Oberfläche bietet den Vorteil, dass Oberflächenkratzer oder insbesondere sharp impact Schäden (z.B. durch das Penetrieren spitzer Körper in die Glasoberfläche) nicht bereits bei sehr geringen Eindringtiefen in den unter Zugspannung stehenden Bereich der Deckscheibe eindringen und so zu einem Versagen der Deckscheibe durch Bruch führen. Gleichzeitig ist es nicht mehr notwendig, aufwendige Vorspannungsprotokolle und einen Mischaustausch vorzunehmen. Insbesondere hat es sich gezeigt, dass es bereits mit einem einzigen Ionenaustausch möglich ist, ein solches Vorspannungsprofil in einer Deckscheibe zu erzeugen. Dies schließt nicht aus, dass gegebenenfalls zur Erzielung weiterer Vorteile im Spannungsprofilverlauf weitere Austauschschritte gegebenenfalls vorgenommen werden können. Jedoch ist dies nicht zwingend erforderlich und es ist nach Ausführungsformen bereits mit nur einem Ionenaustausch möglich, die Festigkeit der Deckscheibe gezielt zu verbessern.

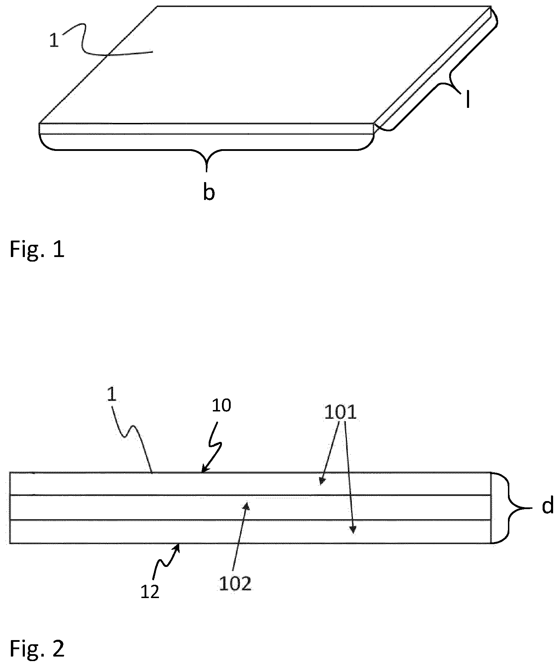

Solche anomalen Spannungsprofile, welche, vorzugsweise in einer Tiefe der Deckscheibe von mehr als 10 $\mu$m, wenigstens einen Wendepunkt, ggf. auch mehrere Wendepunkte aufweisen, sind prinzipiell bekannt. So beschreiben beispielsweise die Schriften EP 2 819 966 B1, US 2020/0002225 A1 und US 2010/0009154 Alauch Vorspannungsprofile in Deckscheiben aus Glas, welche anomale Spannungsprofile mit einem Wendepunkt aufweisen. Allerdings sind zur Erzielung solcher anomaler Spannungsprofile aufwendige Prozesse notwendig, welche mehrfachen Ionenaustausch und Temperaturbehandlungen zwischen diesen Ionenaustauschen umfassen. Die Schrift US 2021/0292225 A1 zeigt ebenfalls anomale Druckspannungsprofile mit einem in Teilen konvexen verlaufenden Spannungsprofil, beispielsweise in Fig. 1 von US 2021/0292225 A1 betreffend Beispiel 5. Dieses anomale Druckspannungsprofil wurde für eine Deckscheibe aus Glaskeramik erhalten, wobei Glaskeramiken, die einen solchen zumindest in Teilen konvexen Verlauf des Spannungsprofils aufweisen, ebenfalls in eher aufwendigen Prozessen erhalten wurden (beispielsweise Beispiel H aus US 2021/0292225 A1), welche neben einem gemischten Austausch (Kalium und Natrium) sogar noch einen zusätzlichen Schritt zum Tempern neben den Ionenaustauschschritten umfassen, oder spezielle Glaskeramiken betreffen, welche nur einen geringen Gehalt an $SiO_2$ zwischen 50 bis 53 Mol-%, einen gleichzeitig sehr hohen Gehalt an $Al_2O_3$ von über 30 Mol-% und einen ebenfalls hohen Gehalt von $Li_2O$ von um die 10 Mol-% aufweisen sowie zusätzlich $Y_2O_3$. $Y_2O_3$ ist dabei in diesen Glaskeramiken bzw. den ursprünglichen Grüngläsern enthalten, weil es in diesen Gläsern mit einem hohen Gehalt von $Al_2O_3$, welches den Schmelzpunkt erhöht, die Schmelzfähigkeit verbessert.

$Y_2O_3$ kann auch in eher üblichen Glaskeramiken mit einem höheren Gehalt an $SiO_2$ und einem geringeren

Gehalt an $Al_2O_3$ als die vorstehend beschriebenen Glaskeramiken nach einer Ausführungsform der US 2021/0292225 A1 enthalten sein und wird in diesem Fall dort, gegebenenfalls zusammen mit anderen Komponenten wie $La_2O_3$ und $Nb_2O_5$, verwendet, um die Brucheigenschaften zu optimieren.

Diese Komponenten, insbesondere die Seltenerdkomponenten $La_2O_3$ und $Y_2O_3$, sind allerdings ungünstig, da sie zu erhöhten Herstellungskosten führen. Nach einer Ausführungsform umfasst die Deckscheibe bzw. die von der Deckscheibe umfasste Glaskeramik $Y_2O_3$, $La_2O_3$ und/oder $Nb_2O_5$ daher nur in Form unvermeidlicher Spuren von jeweils nicht mehr als 0,1 Gew.-%.

Überraschenderweise hat sich gezeigt, dass es bereits möglich ist, mit nur einem einzigen Ionenaustausch bereits ein vorteilhaftes Spannungsprofil zu erhalten, das, vorzugsweise in einer Tiefe der Deckscheibe von mehr als 10 μm, wenigstens einen Wendepunkt aufweist. Dabei ist es auch nicht notwendig, dass das Spannungsprofil mehrere Wendepunkte aufweist, und es kann sogar vorteilhaft sein, dass das Spannungsprofil nur einen Wendepunkt aufweist.

Die Erfinder haben weiter herausgefunden, dass es nach Ausführungsformen möglich ist, mit nur wenigen Austauschschritten einen Spannungsprofilverlauf zu erhalten, welcher mehrere Wendepunkte umfasst. Allgemein haben die Erfinder festgestellt, dass das erzielte Spannungsprofil 2*n-1 Wendepunkte enthält, wobei n die Anzahl der Ionenaustauschschritte beschreibt. Nach einem zweiten Ionenaustauschschritt wird also nach Ausführungsformen ein Spannungsprofil erhalten, welches 3 Wendepunkte aufweist, und nach Durchführung eines dritten Ionenaustauschschritts wird ein Spannungsprofil mit fünf Wendepunkten erhalten. Die Zahl der Wendepunkte bezieht sich hier auf eine Seite der Deckscheibe. Die Wendepunkte sind hier im Verlauf des Spannungsprofils vorzugsweise jeweils in einer Tiefe von wenigstens 10 μm angeordnet.

Der anomale Verlauf des Spannungsprofils in einer Deckscheibe umfassend Glaskeramik im Vergleich zu dem einer Deckscheibe umfassend ein Glas der chemisch identischen Zusammensetzung zur Glaskeramik (wobei hier die Zusammensetzung jeweils vor Durchführung eines Ionenaustauschs gemeint ist) wird darauf zurückgeführt, dass die Vorspannung in der Glaskeramik über einen anderen Mechanismus als im Glas verläuft. Dieser Mechanismus ermöglicht eine besonders effiziente Art der Vorspannung. Mit anderen Worten ist es hier möglich, bereits mit weniger zur Verfügung stehenden auszutauschenden Ionen dieselbe Vorspannung zu erreichen - oder umgekehrt mit demselben Vorspannprozess eine höhere Vorspannung zu erzielen. Dies kann beispielhaft näherungsweise durch die in einer bestimmten Tiefe der Deckscheibe herrschende Vorspannung pro mol des zur Vorspannung verwendeten (oder eingebrachten) Ions beschrieben werden. Insbesondere ist dies für Deckscheiben nach Ausführungsformen die Vorspannung pro Mol eingebrachtem Natriumion. Dieser Wert wird im Rahmen der vorliegenden Offenbarung auch als β-Wert bezeichnet. Er berechnet sich für die Tiefe x allgemein nach der folgenden Formel:

$$\beta(x) = \frac{CS(x) + CT}{c(x)_{Ion} - c(Bulk)_{Ion}} \times \frac{1 - v}{E}$$

Hier bezeichnet CT den zentralen Wert der Zugspannung in der Deckscheibe (maximaler Zugspannungswert des Spannungsprofils) und CS(x) den Wert der Druckspannung bei der Tiefe x. c(x) ist die Konzentration des betrachteten Ions, angegeben als Oxid, in der entsprechenden Tiefe x und c(Bulk) ist die Konzentration des entsprechenden Ions im Bulk. v bezeichnet die Poissonzahl und E den E-Modul des Glases bzw. der Glaskeramik. Auf diese Weise wird also die Vorspannung pro ausgetauschtem Ion bestimmt. Der β-Wert reflektiert also die Vorspanneffizienz einer Ionenspezies im untersuchten Glas oder der untersuchten Glaskeramik in Temperaturbereichen, wo die Relaxation vernachlässigt werden kann.

Bei den Deckscheiben nach der vorliegenden Offenbarung, die eine silikatische Glaskeramik umfassend Keatitmischkristall umfassen, hat sich gezeigt, dass es ausreichend sein kann, für die Bestimmung des β-Werts allein das Natriumion zu betrachten. Denn dieses tauscht besonders effizient aus. Allerdings gilt die angegebene Formel allgemein und kann auch für andere zur Vorspannung verwendete Ionen verwendet werden, insbesondere auch für Kalium.

Dieser β-Wert kann zwischen einer Glaskeramik und einem Glas gleicher Zusammensetzung (also Bulk-Zusammensetzung vor Vorspannung) verglichen werden.

Der β-Wert wird im Rahmen der vorliegenden Offenbarung als Konstante betrachtet, der sich spezifisch für ein Glas oder eine Glaskeramik ergibt, wobei möglicherweise kleine Schwankungen über den Dickenverlauf eintreten können. Für die Berechnung des β-Wertes wurde im Rahmen der vorliegenden Offenbarung an unterschiedlichen Tiefen eines Glasartikels bzw. eines Glaskeramikartikels dessen Wert bestimmt und schließlich das arithmetische Mittel gebildet. Die Erfinder haben für den Rahmen der vorliegenden Offenbarung Glastiefen zur Bestimmung des β-Wertes bis 150 μm betrachtet. Dieser β-Wert ist in der Glaskeramik um einen Faktor zwischen 1,1 und 1,5, vorzugsweise 1,1 und 1,4, größer als in einem Glas gleicher chemischer Zusammensetzung. Beispielhaft wurde für eine Deckscheibe nach einer Ausführungsform ein Verhältnis von 1,26 erhalten. Der Spannungsaufbau durch Ionenaustausch in einer glaskeramischen Deckscheibe nach Ausführungsformen ist also deutlich effizienter als in einer Deckscheibe aus oder umfassend Glas einer der Glaskeramik entsprechenden chemischen Zusammensetzung. Beispielhafte β-Werte liegen für hier betrachtete Deckscheiben im Bereich von 3 * $10^{-4}$/mol bis 9 * $10^{-4}$/mol, beispielsweise zwischen 4 * $10^{-4}$/mol und 8 * $10^{-4}$/mol.

Der β-Wert bezieht sich hier für die vorstehenden Angaben auf Natrium als Ion, welches die Vorspannung bewirkt. Dies ist insbesondere auch deshalb zulässig, gerade bei der Betrachtung des Verhältnisses von β-Wert in einer vorgespannten glaskeramischen Deckscheibe nach Ausführungsformen und einer Deckscheibe umfassend Glas einer identischen chemischen Zusammensetzung wie die jeweilige Glaskeramik, weil die Erfinder herausgefunden haben, dass in vielen Glaskeramiken nach Ausführungsformen gerade Natrium den wesentlichen Anteil der Vorspannung ausmacht und gerade auch sehr effizient ausgetauscht wird. Allerdings ist es auch möglich, je nach verwendeter Grundzusammensetzung des Glases bzw. der korrespondierenden Glaskeramik, diese Betrachtung für andere zur Vorspannung verwendete Ionen, beispielsweise Kalium, durchzuführen. Für die betrachteten Glaskeramiken nach Ausführungsformen ist es allerdings zulässig, wegen des großen Einflusses von Natrium auf die Vorspannung der Einfachheit halber nur die durch Natriumionen erzielte Vorspannung zu betrachten.

Die Deckscheibe ist bevorzugt durch einen ß-Wert gekennzeichnet, bestimmt nach der Formel

$$\beta(x) = \frac{CS(x) + CT}{c(x)_{Ion} - c(Bulk)_{Ion}} \times \frac{1 - v}{E}$$

wobei x die Tiefe der Deckscheibe, CS die Druckvorspannung in dieser Tiefe, CT die maximale Zugspannung (center tension), $c(x)_{Ion}$ die Konzentration des zur Vorspannung verwendeten Ions, $c(Bulk)_{Ion}$ die Konzentration des zur Vorspannung verwendeten Ions im Bulk, v die Poissonzahl und E der E-Modul der Glaskeramik ist, wobei vorzugsweise das betrachtete und zur Vorspannung verwendete Ion das Natrium-Ion ist, und wobei der β-Wert zwischen 3 * $10^{-4}$/mol bis 9 * $10^{-4}$/mol, beispielsweise zwischen 4 * $10^{-4}$/mol und 8 * $10^{-4}$/mol liegt.

Nach einer Ausführungsform weist das Spannungsprofil genau einen Wendepunkt auf. Dies kann vorteilhaft sein, weil ein solches Spannungsprofil bereits in nur einem einzigen Ionenaustauschschritt erhalten werden kann und bereits auf diese Weise vorteilhafte Festigkeitseigenschaften erhalten werden. Insbesondere in der Festigkeit der Deckscheibe gegenüber Einwirkung von stumpfen Gegenständen (blunt impact, getestet beispielsweise in einem Kugelfalltest) können hier sehr vorteilhafte Eigenschaften erzielt werden, die sich aus dem vorteilhaften Verlauf eines Spannungsprofils mit wenigstens einem Wendepunkt, vorzugsweise in einer Tiefe der Deckscheibe von wenigstens 10 μm, ergeben. Denn hier kommt es eben nicht zu einem raschen Abnehmen der Druckspannung an der Oberfläche. Bereits eine Ausführung, bei welcher lediglich ein solcher Wendepunkt erzielt wird, kann daher zu einer signifikanten Verbesserung der mechanischen Eigenschaften führen.

Die geringe Dicke der Deckscheibe zwischen 0,1 mm und 2 mm ist weiterhin auch deshalb vorteilhaft, weil auf diese Weise hohe Lichttransmissionen erzielt werden können. Die Lichttransmission wird vorliegend allgemein als $\tau_{vis}$ angegeben und beträgt mehr als 80%, vorzugsweise mehr als 85%, im Wellenlängenbereich zwischen 380 nm bis 780 nm, bestimmt für Dicken von 0.4 mm bis 0.85 mm. Vorzugsweise werden die Lichttransmissionswerte zu Vergleichszwecken bestimmt bei einer Dicke der Deckscheibe von 0,7 mm. Dünnere Scheiben können zu Vergleichszwecken, ob sie diese Bedingung erfüllen, gestapelt werden, um eine entsprechende Dicke zu erzielen; dickere Scheiben können gedünnt werden. Allgemein werden diese Lichttransmissionswerte erzielt für Dicken der Deckscheibe nach einer Ausführungsform zwischen 0,1 mm und 2 mm.

Die Deckscheibe ist vorliegend allgemein scheibenförmig in dem Sinne ausgestaltet, dass ihre Dicke wenigstens eine Größenordnung geringer ist als Länge und Breite. Sie weist mithin zwei Seitenflächen (oder "Seiten") auf, deren Abmessungen durch Länge und Breite bestimmt werden und von denen aus senkrecht nach innen zum Kern der Deckscheibe hin die oberflächennahe Schicht bestimmt wird. Diese oberflächennahe Schicht ist auf beiden Seiten der Deckscheibe ausgebildet. Sie liegt vorzugweise in einer Schicht von 20 μm bis 70 μm Tiefe.

Die Glaskeramik umfasst Keatit-Mischkristall als Hauptkristallphase, worunter verstanden wird, dass mehr als 50 Vol.-% der von der Glaskeramik umfassten Kristallphasen mit keatitischer Kristallstruktur vorliegen. Vorzugsweise können bis zu 98,5 Vol.-% der von der Glaskeramik umfassten Kristallphasen oder sogar 100 Vol.-% mit keatitischer Kristallstruktur, also als Keatit oder Keatit-Mischkristall vorliegen. Allerdings ist es auch möglich, dass die Glaskeramik noch Nebenphasen umfasst, beispielsweise kristallin vorliegende Keimbildner.

Gemäß einer weiteren Ausführungsform ist die Deckscheibe gekennzeichnet durch einen Farbwert C* von weniger als 4, bevorzugt von weniger als 3. Mit anderen Worten weist die Deckscheibe nur einen sehr geringen Farbstich auf, sodass auch die Durchsicht durch die Deckscheibe auf eine dahinterliegende Anzeige ohne störende Farbverfälschung ermöglichst ist. Der Farbwert C* oder $C_{ab}$* wird auch als Chroma bezeichnet und berechnet sich aus den Farbwerte a*, b* wie folgt:

$$C^* = \sqrt{((a^*)^2 + (b^*)^2)}$$

Gemäß einer nochmals weiteren Ausführungsform ist die Deckscheibe gekennzeichnet durch einen Haze von 0,01% bis 1% bezogen auf eine Dicke der Deckscheibe von 0,7 mm. Unter dem Haze wird die Trübung verstanden. Mit anderen Worten ist die Deckscheibe nur gering trüb ausgebildet.

Um eine geringe Chromatizität und/oder eine geringe Trübung zu erzielen, kann es vorteilhaft sein, den Gehalt der Glaskeramik an $TiO_2$ begrenzt ist. $TiO_2$ ist eine bekannte Komponente von silikatischen Glaskeramiken, beispielsweise von sogenannten Lithium-Aluminium-Silikatglaskeramiken, wo sie insbesondere einer effizienten Keimbildung dienen kann. Allerdings hat sich gezeigt, dass diese Komponente, auch wenn sie selbst nicht färbt, zu einer Färbung der resultierenden Glaskeramik infolge von Trübung beitragen kann. Die Glaskeramik umfasst daher gemäß einer Ausführungsform $TiO_2$, vorzugsweise zu höchstens 4 Gew.-% $TiO_2$, besonders bevorzugt zu höchstens 3 Gew.-%.

Vorteilhaft ist gemäß einer Ausführungsform, die von der Deckscheibe umfasste Glaskeramik als Lithium-Aluminium-Silikatglaskeramik ausgebildet und die Kristallphase als Keatit-Mischkristall. Lithium-Aluminium-Silikatglaskeramiken sind als Material gut bekannt, was hinsichtlich der Herstellung der Glaskeramik deutliche Vorteile bietet. Eine Ausbildung der Glaskeramik, sodass sie als kristalline Phase (oder Kristallphase) Keatit-Mischkristall umfasst, ist weiterhin deshalb vorteilhaft, weil sich gezeigt hat, dass nicht jede Kristallphase im System der Lithium-Aluminium-Silikatglaskeramiken vorspannbar ausgestaltet ist. Gerade Keatit bzw. Keatit-Mischkristall weist allerdings offensichtlich eine Kristallstruktur auf, welche einem Ionenaustausch, und zwar einem, bei welchem Lithium gegen Natrium und/oder Natrium und/oder Lithium gegen Kalium ausgetauscht wird, zugänglich ist. Nachteilig an bekannten Keatit-Mischkristall-Glaskeramiken, gerade solchen, welche bereits intrinsisch eine hohe Festigkeit aufweisen, ist allerdings, dass diese Glaskeramiken zumeist eine starke Trübung aufweisen. Überraschenderweise zeigt sich allerdings, dass Deckscheiben umfassend Keatit-Mischkristall-Glaskeramiken möglich sind, welche gleichzeitig eine geringe Trübung, eine nur geringe Farbigkeit und weiterhin auch einen hohen Lichttransmissionsgrad aufweisen. Der Grund hierfür ist seitens der Erfinder noch nicht gänzlich verstanden. Die Erfinder vermuten allerdings, dass dies an der speziellen Ausbildung der Kristallphase, insbesondere im vorgespannten Zustand, liegen könnte, sodass die optischen Eigenschaften der Kristallphase und der Restglasphase optimal aufeinander abgestimmt sind in der Form, dass wenig Brechzahlunterschiede zwischen diesen beiden Phasen resultieren. Dies vermindert Trübungseffekte und könnte erklären, warum eine solche Ausbildung die vorteilhaften optischen Eigenschaften aufweist.

Allgemein, ohne Beschränkung auf eine spezielle Ausführungsform, kann nach einer Ausführungsform die Glaskeramik folgende Komponenten in Gew.-% auf Oxidbasis umfassen:

| | |
|---|---|
| $SiO_2$ | 55-75, bevorzugt 62-72 |
| $Al_2O_3$ | 18-27, bevorzugt 18-23 |
| $Li_2O$ | 2,8-5, bevorzugt 3-5. |

Es handelt sich hierbei um eine silikatische Glaskeramik, welche ausreichend gut als Glas schmelzbar ist und nicht zu sofortiger und ungeregelter Kristallisation neigt. In diesem allgemeinen Zusammensetzungsbereich sind insbesondere bekannte Lithium-Aluminium-Silikatglaskeramiken herstellbar, welche beispielsweise hinsichtlich der Schmelz- und Keramisierungsbedingungen gut bekannt sind. Ein Gehalt der Glaskeramik an Lithium ist weiterhin vorteilhaft, weil auf diese Weise ein Austausch von Natrium und/oder Kalium gegen Lithium möglich ist.

Gemäß einer Ausführungsform umfasst die Glaskeramik die Komponenten $La_2O_3$, $Y_2O_3$ und/oder $Nb_2O_5$ lediglich in Form unvermeidlicher Spuren von jeweils nicht mehr als 0,1 Gew.-%.

Gemäß einer weiteren Ausführungsform umfasst die Glaskeramik MgO, wobei eine bevorzugte Obergrenze bei 8 Gew.-% liegt. Besonders bevorzugt umfasst die Glaskeramik nicht mehr als 4 Gew.-% MgO. MgO ist eine bevorzugte Komponente, weil es die Bildung von Keatit-Mischkristallen fördert. Dies bedeutet, dass ein gewisser Gehalt an MgO zu einer Erniedrigung der Keramisierungstemperatur führt. Bei zu hohen Gehalten an MgO können sich jedoch unerwünschte Nebenphasen bilden, wie beispielsweise Spinell und/oder Magnesiumtitanat. Dies wirkt sich dann negativ auf die Transparenz des resultierenden glaskeramischen Materials aus, insbesondere hinsichtlich dessen Streuung. Daher ist der Gehalt der Glaskeramik an MgO vorteilhaft in den vorstehend genannten Grenzen begrenzt.

Gemäß einer Ausführungsform umfasst die Glaskeramik weiterhin ZnO, vorzugsweise zu höchstens 6 Gew.-%, insbesondere vorzugsweise nicht mehr als 2 Gew.-%. Ein solcher Gehalt an ZnO kann vorteilhaft sein, weil ZnO die Viskosität des Glases absenkt, sodass das Grünglas der Glaskeramik leichter schmelzbar ist. Allerdings führt ZnO in zu großen Gehalten zur Bildung von Fremdphasen, wie beispielsweise Gahnit und damit zu einer erhöhten Streuung.

Andere Erdalkalimetalloxide wie CaO, BaO, können sich ebenfalls positiv auf die Schmelzeigenschaften auswirken. Die Menge solcher Komponenten RO (umfassend die Oxide der Erdalkalimetalle sowie ZnO) sollte jedoch allgemein begrenzt werden, um die Bildung von Fremdphasen zu vermeiden, wie zu einer höheren Streuung und damit zu einer Minderung der Transmission führen können. Weiterhin können insbesondere die Oxide der schwereren Erdalkalien, wie BaO, SrO, verwendet werden, um den Brechungsindex der Restglasphase an die Kristallphase anzupassen und so die Transmission zu optimieren.

Eine besondere Komponente der Glaskeramik nach einer Ausführungsform ist $SnO_2$. $SnO_2$ kann in der Schmelze beispielsweise als Läutermittel wirken, in der Glaskeramik selbst dann als Keimbildner. Die Glaskeramik der Deckscheibe umfasst daher $SnO_2$, und zwar vorzugsweise zu höchstens 2 Gew.-% Besonders bevorzugt sind Gehalt von $SnO_2$ von mindestens 0,05 Gew.-% und vorzugsweise höchstens 1,6 Gew.-%. Höhere Gehalte von $SnO_2$ führen zu einer starken Entglasungsneigung und verschlechtern so die Produzierbarkeit der Glaskeramik. Auch die Komponenten $ZrO_2$ und $TiO_2$ können in den Glaskeramiken nach Ausführungsformen als Keimbildner wirken. Es hat sich gezeigt, dass die Keimbildung und insbesondere der Gehalt der Glaskeramik an Keimbildnern und deren Verhältnis zueinander bestimmend sein kann für die Ausbildung einer nur gering gefärbten, silikatischen Glaskeramik mit guter Lichttransmission und geringer Trübung. Die Glaskeramik umfasst daher gemäß einer Ausführungsform $TiO_2$, vorzugsweise zu höchstens 4 Gew.-% $TiO_2$, besonders bevorzugt zu höchstens 3 Gew.-%.

Ein sehr effizienter Keimbildner in der Glaskeramik nach einer Ausführungsform ist weiterhin auch $ZrO_2$. Die Glaskeramik umfasst nach einer Ausführungsform daher $ZrO_2$, vorzugsweise zu höchstens 5 Gew.-%, insbesondere vorzugsweise zu höchstens 4 Gew.-%, und besonders bevorzugt mindestens zu 1,2 Gew.-%.

Die Glaskeramik kann weiterhin umfassen $Fe_2O_3$, und zwar bis zu 0,1 Gew.-%. $Fe_2O_3$ ist in den Glaskeramiken nach Ausführungsformen zumeist in der Form von unvermeidlichen Verunreinigungen vorhanden, ist aber gleichzeitig auch förderlich für die Keimbildung, sodass ein gewisser Gehalt an $Fe_2O_3$ auch förderlich sein kann. Um eine möglichst farbneutrale Glaskeramik zu erhalten, sollte der Gehalt an $Fe_2O_3$ allerdings begrenzt werden und beträgt vorzugsweise nicht mehr als 0,02 Gew.-%. Insbesondere sind Gehalt zwischen 0,0001 Gew.-% bis 0,1 Gew.-% möglich, bevorzugt zwischen 0,0001 und 0,02 Gew.-%. Mit anderen Worten ist allgemein der Gehalt der Glaskeramik der Deckscheibe an $Fe_2O_3$ nach einer Ausführungsform kleiner als 0,02 Gew.-%.

Für das Verhältnis der kritischen Komponenten $TiO_2$ und $ZrO_2$ gilt nach einer Ausführungsform der folgende Zusammenhang:

$0 < (TiO_2+ZrO_2)$ kleiner als 9,5 %, bevorzugt 1,2 kleiner $(TiO_2+ZrO_2)$ kleiner als 9,5 %.

Es hat sich gezeigt, dass bei einer solchen Gesamtsumme der beiden keimbildenden Komponenten $TiO_2$ und $ZrO_2$ besonders gute Werte hinsichtlich der Trübung und einer geringen Farbigkeit erzielt werden können.

Noch besser kann dies allgemein erzielt werden, wenn in das Verhältnis der Keimbildner zueinander auch die weitere keimbildende Komponente $SnO_2$ einbezogen wird. Gemäß der Erfindung gilt es :

$$0,01 \leq SnO_2/(ZrO_2+TiO_2) < 0,7$$

Insbesondere kann die Glaskeramik nach einer Ausführungsform folgende Komponenten in Gew.-% auf Oxidbasis umfassen:

| | |
|---|---|
| $SiO_2$ | 55-75, bevorzugt 62-72 |
| $Al_2O_3$ | 18-27 |
| $Li_2O$ | 2,8-5, bevorzugt 3-5 |
| $Na_2O$ | 0-4, bevorzugt 0-2 |
| $K_2O$ | 0-4, bevorzugt 0-2 |
| $MgO$ | 0-8, bevorzugt 0-4 |
| $CaO$ | 0-4, bevorzugt 0-2 |
| $SrO$ | 0-4, bevorzugt 0-2 |
| $BaO$ | 0-4, bevorzugt 0-2 |
| $ZnO$ | 0-6, bevorzugt 0-2 |
| $TiO_2$ | 0-4, bevorzugt 0-3 |
| $ZrO_2$ | 0-5, bevorzugt 1,2-4 |
| $B_2O_3$ | 0-2, bevorzugt 0-0,1 |
| $Fe_2O_3$ | 0,0001 - 0,1, bevorzugt 0,0001 - 0,02 |
| $SnO_2$ | > 0-2, bevorzugt 0,05-1,6 |

wobei vorzugsweise für die Summe der Komponenten $TiO_2$ und $ZrO_2$ gilt:
$0 < \Sigma (TiO_2+ZrO_2) <$ als 9,5 %, bevorzugt $1,2 < \Sigma (TiO_2+ZrO_2) < 9,5$ %.

Gemäß einer Ausführungsform umfasst die Glaskeramik der Deckscheibe Kristallphasen mit einer Kristallitgröße von 120 nm oder weniger. Vorzugsweise sind die von der Glaskeramik umfassten Kristallite höchstens 90 nm oder kleiner. Besonders bevorzugt ist eine Ausführungsform, bei welcher die Glaskeramik der Deckscheibe frei von $As_2O_3$ und/oder $Sb_2O_3$ ist. Unter "frei von" diesen Komponenten wird im Rahmen der vorliegenden Offenbarung verstanden, dass diese Komponenten lediglich in Form unvermeidlicher Verunreinigungen oder Spuren vorliegen, in einem Gehalt von je höchstens 500 ppm, bezogen auf das Gewicht, bevorzugt höchstens 100 ppm, bezogen auf das Gewicht.

Gemäß einer weiteren Ausführungsform ist die Deckscheibe gekennzeichnet durch eine sharp-impact-Festigkeit, bestimmt in einem set-drop-Test, zwischen wenigstens 120 cm und bis zu 200 cm Fallhöhe, vorzugsweise bestimmt für eine Deckscheibe mit einer Dicke von 0,7 mm. Für die Ermittlung der sharp impact Festigkeit von nicht vorgespannten Gläsern oder Glaskeramiken wird vorzugsweise ein Sandpapier der Körnung 180 verwendet, um darstellbare Werte zu erhalten. Dagegen wird für vorgespannte Gläser und Glaskeramiken vorzugsweise ein Sandpapier der #60 verwendet, um die sharp impact Festigkeit zu ermitteln..

Unter einer sogenannten "sharp impact" Festigkeit wird im Rahmen der vorliegenden Offenbarung verstanden, dass ein Smartphone-Dummy, welcher die zu testende Scheibe enthält, mittels eines Fallgerätes derart auf eine raue Oberfläche fällt, dass eine Vielzahl kleiner, spitzer Gegenstände (z.B. Sandkörner auf Asphalt, Beton oder Sandpapier) in die zu testende Scheibe eindringen können. Mit anderen Worten handelt es sich also um eine Einwirkung mit einem oder mehreren spitzen Gegenständen, also beispielsweise mit Partikeln, welche sehr geringe Krümmungsradien aufweisen bzw. bei welchen der Winkel eines Anteils der Spitzen weniger als 100° beträgt.

Dabei erreichen glaskeramische Deckscheiben des Typs Keatit nach einer Ausführungsform, die eine chemische Vorspannung der kristallinen Phase aufweisen, im Mittel Fallhöhen von ca. 172 cm, also ca. 4 mal so hoch wie ein nicht keramisiertes, aber vorgespanntes Standardglas und wo die chemische Vorspannung traditionell in der Glasphase aufgebaut ist und der im Mittelwert eine Fallhöhe von 42 cm aufweist. Ähnlich vorgespannte glaskeramische Deckscheiben des Typs Keatit nach einer anderen Ausführungsform bestätigen die hohe Fallhöhe mit ca. 156 cm (siehe Bild 8).

Gemäß einer Ausführungsform liegt die Deckscheibe als mit Natriumionen vorgespannte Deckscheibe vor. Die Deckscheibe kann ausschließlich mit Natriumionen vorgespannt vorliegen, was insbesondere aufgrund der hohen Selektivität der Vorspannung durch Natrium in Glaskeramiken nach Ausführungsformen möglich ist, auch bei Salzen mit sogenannter technischer Reinheit oder sogar bei Salzmischungen, die einen hohen Anteil an K enthalten (beispielhaft bis ca. 90% Anteil $KNO_3$). Nach einer weiteren Ausführungsform kann es allerdings vorteilhaft sein, wenn ein gewisser Anteil Lithiumionen vom Tauschbad umfasst sind, beispielsweise bis 0,1 Gew.-% Lithiumsalz, beispielsweise 0,1 Gew.-% $LiNO_3$ in einem Tauschbad von ansonsten $NaNO_3$. Gemäß einer weiteren Ausführungsform liegt die Deckscheibe als mit Kaliumionen vorgespannte Deckscheibe vor, insbesondere als lediglich mit Kaliumionen vorgespannte Deckscheibe. Die Reinheit des Kaliumtauschbades beträgt hier 99,9 % (bezogen auf das Gewicht).

Allgemein ist es nach einer Ausführungsform auch möglich, dass die Deckscheibe als mit Natriumionen und Kaliumionen vorgespannte Deckscheibe vorliegt.

Gemäß einer Ausführungsform erfolgt nur ein Ionenaustausch, wobei das Tauschbad vorzugsweise $NaNO_3$ und gegebenenfalls bis 0,1 Gew.-% $LiNO_3$ umfasst oder $KNO_3$ mit einer Reinheit von 99,9%, bezogen auf das Gewicht, umfasst.

Es hat sich gezeigt, dass gerade bei einer reinen Vorspannung mittels Natrium besonders vorteilhafte Ausführungen erhalten werden. Insbesondere können hier bereits in relativ kurzen Vorspannungszeiten aufgrund der hohen Selektivität des Ionenaustauschs vorteilhafte Spannungsprofile und entsprechend mechanische Eigenschaften erhalten werden, nämlich insbesondere für den Fall der sogenannten set-drop-Festigkeit. Bei der Betrachtung anderer Festigkeiten, beispielsweise einer Vier-Punkt-Biegefestigkeit, kann es aber vorteilhaft sein, auch eine Kalium-Vorspannung bzw. allgemein einen gemischten Austausch vorzunehmen.

Gemäß einer weiteren Ausführungsform umfasst die Glaskeramik der Deckscheibe kein Lithiummetasilikat als Kristallphase. Dies ist vorteilhaft, da auf diese Weise die Glaskeramik insbesondere so ausgestaltet ist, dass Kristallphasen, welche dem vorteilhaften und selektiven Austauschprozess wie vorstehend beschrieben zugänglich sind, von der Glaskeramik umfasst, sind, insbesondere Keatit-Mischkristalle.

Die vorliegende Erfindung betrifft auch ein Verfahren. Das Verfahren zur Herstellung einer Deckscheibe nach einer Ausführungsform umfasst die Schritte:

- Herstellen eines silikatischen Grünglases durch einen Schmelzprozess und eine anschließende Heißformgebung
- Temperaturbehandlung des silikatischen Grünglases, wobei mindestens ein Keimbildungsschritt im Temperaturbereich von 650°C-850°C, vorzugsweise von 690°C-850°C, für eine Dauer von 5 min. bis 60 h, vorzugsweise bis 8 h, besonders bevorzugt 30 min. bis 2 h und mindestens ein Keramisierungsschritt im Temperaturbereich von 700°C-1100°C, vorzugsweise von 780°C-1100°C, für eine Dauer von 3 min. bis 120 h, vorzugsweise bis 60 h, bevorzugt 3 min. bis 8 h, durchgeführt werden,
- Durchführen wenigstens eines Ionenaustauschs in einem Tauschbad mit einer Zusammensetzung von 100 Gew.-

% bis 0 Gew.-% $KNO_3$ und/oder 0 Gew.-% bis 99,9 Gew.-% $NaNO_3$ und 0 Gew.-% -5 Gew.-% $LiNO_3$ bei einer Temperatur des Tauschbads zwischen 360°C und 500°C und einer Dauer zwischen 2 Stunden und 50 Stunden.

Vorzugsweise beträgt die Abkühlrate zwischen 2°C bis 50°C/min.

Allgemein ist es möglich, einen oder mehrere weitere Tauschschritte durchzuführen, beispielsweise in einem oder mehreren weiteren Schritten mit einem Tauschbad mit einer Zusammensetzung zwischen 90 Gew.-% $KNO_3$ und 10 Gew.-% $NaNO_3$ bis zu 100 Gew.-% $KNO_3$ oder zwischen 70, vorzugsweise 50, Gew.-% $NaNO_3$ und 30, vorzugsweise 50, Gew.-% $LiNO_3$ bis zu 100 Gew.-% $NaNO_3$ bei Temperaturen zwischen 360°C und 500°C und einer Dauer zwischen einer halben Stunde und bis zu 20 Stunden.

Die Messung der Kenngrößen der chemischen Vorspannung, CS 0 (Druckspannung an der Oberfläche der Deckscheibe), CS 30 (Druckspannung bzw. allgemein Spannung in einer Tiefe von 30 $\mu$m sowie DoCL (Tiefe der Druckspannungslage, teilweise auch Austauschtiefe genannt), kann mittels geeigneter Messgeräte, beispielsweise dem Messgerät SLP-1000 und dem FSM 6000, bestimmt werden. Die DoCL ist allerdings nicht identisch mit der Tiefe des Ionenaustauschs.

Die vorliegende Offenbarung betrifft allgemein daher auch eine Deckscheibe, hergestellt oder herstellbar in einem Verfahren nach einer Ausführungsform.

Weiterhin betrifft die vorliegende Erfindung die Verwendung einer Deckscheibe nach einer Ausführungsform in elektronischen Geräten, insbesondere in elektronischen Anzeigegeräten, insbesondere in mobilen elektronischen Anzeigegeräten, beispielsweise in mobile touch panels und/oder mobilen digitalen Anzeigegeräten wie Smartphones oder Smartwatches und allgemein Touchpanels. Weiterhin betrifft die vorliegende Erfindung auch ein Anzeigegerät, insbesondere ein digitales Anzeigegerät, wie ein touch panel oder eine Smartwatch oder ein Smartphone umfassend eine Deckscheibe nach Ausführungsformen.

Unter einem Tauschbad wird eine Salzschmelze verstanden, wobei diese Salzschmelze in einem Ionenaustauschverfahren für ein Glas oder einen Glasartikel zum Einsatz kommt. Im Rahmen der vorliegenden Offenbarung werden die Begriffe des Tauschbads und des Ionenaustauschbads synonym verwendet.

In der Regel werden für Tauschbäder Salze in technischer Reinheit verwendet. Dies bedeutet, dass trotz der Verwendung von beispielsweise lediglich Natriumnitrat als Ausgangsstoff für ein Tauschbad noch gewisse Verunreinigungen vom Tauschbad umfasst sein können. Das Tauschbad ist dabei eine Schmelze eines Salzes, beispielsweise also von Natriumnitrat, oder eines Gemischs von Salzen, beispielsweise ein Gemisch von einem Natrium- und einem Kaliumsalz. Dabei wird die Zusammensetzung des Tauschbades in der Form angegeben, dass sie sich auf die nominelle Zusammensetzung des Tauschbades ohne Berücksichtigung von eventuell vorhandenen Verunreinigungen bezieht. Sofern daher im Rahmen der vorliegenden Offenbarung von einer 100%igen Natriumnitratschmelze gesprochen wird, bedeutet dies also, dass als Rohstoff lediglich Natriumnitrat verwendet wurde. Der tatsächliche Gehalt des Tauschbades an Natriumnitrat kann jedoch davon abweichen und wird dies in der Regel auch, da insbesondere technische Rohstoffe einen gewissen Anteil an Verunreinigungen aufweisen. Dieser liegt jedoch in der Regel bei weniger als 5 Gew.-%, bezogen auf das Gesamtgewicht des Tauschbads, insbesondere bei weniger als 1 Gew.-%.

Es ist jedoch auch möglich und kann bei bestimmten Gegebenheiten auch vorteilhaft sein, wenn besonders reine Salze verwendet werden, also Salze nicht in technischer Reinheit verwendet werden, sondern beispielsweise in analytischer Qualität. Dies kann insbesondere dann vorteilhaft sein, wenn eine Deckscheibe vorgespannt werden soll, welche einem sehr selektiven Ionenaustausch zugänglich ist. Es hat sich nämlich gezeigt, dass bestimmte Glaskeramiken gerade einem solchen zugänglich sind und vorzugsweise ein Austausch nur eines bestimmten Ions, beispielsweise von Natrium, stattfindet, und ein Austausch gegen Kalium dann nicht stattfindet. Diese hohe Selektivität bestimmter Ausführungsformen von Glaskeramiken bzw. von Deckscheiben führt dazu, dass bei Anwesenheit geringer Verunreinigungen doch nur die Verunreinigung ausgetauscht wird, also beispielsweise in einem technisch reinen KNOs-Tauschband mit etwa 0,5 Gew.-% Gehalt an $NaNO_3$ doch nur ein Natrium-Austausch stattfände.

Daher kann es nach einer beispielhaften Ausführungsform vorgesehen sein, dass Salze mit einer 3n-Reinheit (99,9% rein, bezogen auf das Gewicht) verwendet werden, insbesondere, wenn nur ein Austausch gegen ein bestimmtes Ion vorgesehen ist. Sofern solche Salze verwendet werden, ist dies speziell vermerkt. Vorzugsweise ist es jedoch möglich, technisch reine Salze zu verwendet, da diese deutlich kostengünstiger sind als hochreine Salze. Die Reinheit beträgt hier typischerweise 2n, also beispielsweise 99,5 %, bezogen auf das Gewicht.

Vorteilhaft erfolgt nach einer Ausführungsform nur ein Ionenaustausch, wobei das Tauschband vorzugsweise aus reinem $NaNO_3$ oder reinem $KNO_3$ besteht, wobei unvermeidliche Verunreinigungen bis zu einem Gehalt von insgesamt 0,01 Gew.-% enthalten sein können. Dies stellt eine besonders einfache Verfahrensführung dar und kann daher bevorzugt sein. Gerade bei einer $NaNO_3$-Vorspannung kann es aber bevorzugt sein, um ein zu feinkrümeliges Bruchbild im Versagensfall zu vermeiden, wenn neben Natriumionen noch Lithiumionen vorhanden sind, beispielsweise in einer Konzentration bis 0,1 Gew.-% Lithiumsalz.

In entsprechender Weise werden bei Tauschbädern, welche ein Gemisch verschiedener Salze aufweisen, die nominellen Gehalte dieser Salze ohne Berücksichtigung von technisch bedingten Verunreinigungen der Ausgangsstoffe angegeben. Ein Tauschbad mit 90 Gew.-% $KNO_3$ und 10 Gew.-% $NaNO_3$ kann also ebenfalls noch geringe Verunreinigungen aufweisen, welche jedoch durch die Rohstoffe bedingt sind und in der Regel bei weniger als 5 Gew.-%, bezogen auf das Gesamtgewicht des Tauschbads, insbesondere bei weniger als 1 Gew.-%, liegen sollten.

Die vorstehenden Ausführungen zur Zusammensetzung des Tauschbades gelten hier in entsprechender Weise.

Weiterhin ändert sich die Zusammensetzung des Tauschbades auch im Laufes des Ionenaustausches, da durch den fortgesetzten Ionenaustausch insbesondere Lithiumionen aus dem Glas bzw. dem Glasartikel in das Tauschbad migrieren. Eine solche Änderung der Zusammensetzung des Tauschbades durch Alterung wird vorliegend allerdings ebenfalls, sofern nicht ausdrücklich anders angegeben, nicht berücksichtigt. Vielmehr wird im Rahmen der vorliegenden Offenbarung bei der Angabe der Zusammensetzung eines Tauschbads auf die nominelle ursprüngliche Zusammensetzung abgestellt.

Beispiele

Im Folgenden wird die Erfindung anhand von Beispielen näher erläutert.

Die Zusammensetzungen erfindungsgemäßer glaskeramischer Materialien finden sich in Tabelle 1.

Die in Tabelle 1 aufgeführten Materialien wurden unter Verwendung von in der Glasindustrie üblichen Rohstoffen bei Temperaturen von ca. 1600 bis 1680°C erschmolzen und geläutert. Das Aufschmelzen des Gemenges erfolgte dabei zunächst in Tiegeln aus gesintertem Kieselglas und wurde dann in Pt/Rh-Tiegel mit Innentiegeln aus Kieselglas umgegossen und bei Temperaturen von ca. 1550°C für 30 Minuten durch Rühren homogenisiert. Nach Abstehen bei 1640°C für 2 h wurden Gussstücke von ca. 140mmx100mmx30mm Größe gegossen und in einem Kühlofen bei ca. 620 bis 680°C entspannt und auf Raumtemperatur abgekühlt. Aus den Gussstücken wurden die Prüfmuster für die Messung der Eigenschaften im glasigen Zustand und für die Keramisierungen präpariert.

Für die Keramisierungen wurden in der Regel zweistufige Programme verwendet, die in Tabelle 1 angegeben sind. Hierbei werden die Ausgangsgläser von Raumtemperatur zunächst auf eine Keimbildungstemperatur oberhalb von $T_g$ erhitzt und dort eine für die Keimbildung ausreichende Zeit gehalten. Anschließend werden die Proben auf die Keramisierungstemperatur erhitzt und dort ebenfalls gehalten. Auch drei- oder mehrstufige Programme können verwendet werden (Beispiel 2 in Tabelle 1). Haltezeiten können weiterhin durch langsame Heizraten ersetzt werden.

An den keramisierten Proben wurden mit Hilfe von XRD Kristallphasen und deren Gehalte sowie die Transmission im sichtbaren Bereich $\tau_{vis}$ (an Proben mit 0,7 mm Dicke) sowie die Farbwerte im Lab-System (Normlichtart C) bestimmt.

Die in Tabelle 1 angegebenen Kristallphasengehalte wurden mit Hilfe von Röntgenbeugungsmessungen an einem Panalytical X'Pert Pro Diffraktometer (Almelo, Niederlande) bestimmt. Als Röntgenstrahlung wurde eine über einen Ni-Filter erzeugte $CuK\alpha$-Strahlung ($\lambda$ = 1.5060 Å) verwendet. Die Standard-Röntgenbeugungsmessungen an Pulver- als auch Festkörperproben wurden unter einer Bragg-Brentano Geometrie ($\theta$-$2\theta$) durchgeführt. Die Röntgenbeugungsdiagramme wurden zwischen 10° und 100° ($2\theta$-Winkel) gemessen. Die Quantifizierung der relativen kristallinen Phasenanteile, sowie die Bestimmung der Kristallitgrößen erfolgte über eine Rietveld-Analyse. Die Messung erfolgte an gemahlenem Probenmaterial, wodurch der Volumenanteil des Kernbereichs deutlich dominiert. Die gemessenen Phasenanteile entsprechen daher der Phasenverteilung im Kern der Glaskeramik. Die Proben mit "V" entsprechen Vergleichsbeispielen. Die lediglich nummerierten Beispiele sind Beispiele von Ausführungsformen.

Tabelle 1

| Beispiele | V1 | V2 | 1 | 2 | 3 |
|---|---|---|---|---|---|
| $Al_2O_3$ | 19,95 | 19,95 | 22,50 | 19,86 | 21,70 |
| $As_2O_3$ | 0,85 | 0,85 | | | |
| $B_2O_3$ | | | 0,20 | | |
| BaO | 0,84 | 0,84 | | 2,26 | 0,55 |
| CaO | | | 0,02 | 0,43 | 0,25 |
| Cl | | | | | |
| $Fe_2O_3$ | | | | 0,012 | 0,015 |
| $HfO_2$ | | | | | |
| $K_2O$ | 0,19 | 0,19 | 0,20 | 0,27 | 0,32 |

(fortgesetzt)

| Beispiele | V1 | V2 | 1 | 2 | 3 |
|---|---|---|---|---|---|
| $Li_2O$ | 3,67 | 3,67 | 4,40 | 3,95 | 3,64 |
| MgO | 1,07 | 1,07 | 1,02 | 0,27 | 0,32 |
| $Na_2O$ | 0,15 | 0,15 | 0,65 | 0,61 | 0,15 |
| $Nd_2O_3$ | 0,06 | 0,06 | 0,24 | | 0,05 |
| $P_2O_5$ | | | 0,20 | | 0,03 |
| $Sb_2O_3$ | | | | | |
| $SiO_2$ | 67,31 | 67,31 | 65,50 | 66,64 | 66,40 |
| $SnO_2$ | | | 0,54 | 0,12 | 0,07 |
| SrO | | | | | 0,50 |
| $TiO_2$ | 2,29 | 2,29 | 1,60 | 2,20 | 2,20 |
| $V_2O_5$ | | | | | |
| ZnO | 1,70 | 1,70 | 0,44 | 1,50 | 1,94 |
| $ZrO_2$ | 1,76 | 1,76 | 1,95 | 1,90 | 1,85 |
| NaCl | | | 0,12 | | |
| SUMME | 99,84 | 99,84 | 99,58 | 100,02 | 99,99 |
| $SnO_2/(TiO_2+Zr O_2)$ | 0,00 | 0,00 | 0,15 | 0,03 | 0,02 |
| Dichte [$g/cm^3$] | | 2,512 | | | |
| Keramisierung | 760°C/30 min. + 900°C/10 min. | 760°C/30 min. + 990°C/5 min. | 760°C/60 min. + 990°C/8 min. | 795°C/60 min. + 930°C/60 min. +975°C/5 min. | 760°C/60 min.+ 1000°C/12 min |
| Hauptkristallphasen | HQMK | KMK | KMK | KMK | KMK + HQMK |
| relativer Anteil KMK | n.b. | n.b. | 96 | 96 | 86 |
| $\tau_{vis}$ (C/2) 0,7mm | 90,3 | 76,6 | 80,2 | 87,6 | 84,9 |
| YI (Norm.L. C Yellow.) | 1,7 | | | | |
| L* | 96,13 | 90,1 | 91,8 | 95 | 94,1 |
| a* | -0,14 | -0,1 | -1,2 | -0,1 | 1,2 |
| b* | 0,77 | 8,6 | 9,1 | 1,5 | 4,4 |
| C* | 0,78 | 8,6 | 9,2 | 1,5 | 4,6 |

Tabelle 1 (fortgesetzt)

| Beispiele | V3 | V4 | 4 | 5 | 6 |
|---|---|---|---|---|---|
| $Al_2O_3$ | 20,50 | 21,98 | 22,02 | 19,35 | 19,35 |
| $As_2O_3$ | | | | | |
| BaO | 1,92 | | 1,23 | | |
| CaO | | 0,02 | 0,02 | 0,03 | 0,20 |
| $Fe_2O_3$ | 0,014 | 0,008 | 0,008 | 0,018 | 0,010 |

(fortgesetzt)

| Beispiele | V3 | V4 | 4 | 5 | 6 |
|---|---|---|---|---|---|
| HfO$_2$ | | | | | |
| K$_2$O | | | | | 0,50 |
| Li$_2$O | 3,20 | 3,59 | 3,68 | 4,25 | 4,50 |
| MgO | 0,10 | 0,75 | 1,20 | 1,26 | 0,50 |
| Na$_2$O | 0,52 | 0,38 | 0,39 | 0,06 | 0,50 |
| P$_2$O$_5$ | | 1,37 | 1,36 | | |
| SiO$_2$ | 67,40 | 67,70 | 65,90 | 70,90 | 68,50 |
| SnO$_2$ | 0,07 | 1,22 | 1,24 | 1,59 | 1,50 |
| SrO | | | 0,01 | | 0,50 |
| TiO$_2$ | 2,31 | 0,01 | 0,01 | 0,02 | |
| ZnO | 1,42 | | | | 1,50 |
| ZrO$_2$ | 1,80 | 2,92 | 2,93 | 2,44 | 2,50 |
| SUMME | 99,25 | 99,94 | 100,00 | 99,92 | 100,06 |
| SnO$_2$/(TiO$_2$+ZrO$_2$) | 0,02 | 0,42 | 0,42 | 0,65 | 0,60 |
| T$_g$ | 701 | | 725 | | 700°C |
| Keramisierung | 760°C/60 min. + 1000°C/12 min | 760°C/60 min. + 1000°C/12 min | 760°C/60 min. + 980°C/8min | 760°C/60 min. +990°C/ 12 min. | 740°C/ 3h+ 830°C/10 min |
| Hauptkristallphasen | HQMK | HQMK | KMK | KMK | KMK |
| relativer Anteil KMK | - | - | 97,4 | 94,5 | 98,2 |
| Kristallitgröße KMK (nm) | n.b. | n.b. | 68 | 69 | 69 |
| Transmission D=0,8mm | n.b. | n.b. | n. b. | n.b. | n.b. |
| $\tau_{vis}$ (C/2) 0,7mm | 88,9 | 83,4 | 80,6 | 90 | 82,5 / 4mm |
| YI (Norm.L. C Yellow.) | | | | | |
| Normlichtart C | | | | | |
| L* | 95,5 | 93,2 | 91,9 | 96 | 92,8 |
| a* | -0,3 | -0,1 | 0,4 | -0,1 | -0,7 |
| b* | 2,4 | 5,6 | 3,2 | 1,2 | 6,1 |
| C* | 2,4 | 5,6 | 3,2 | 1,2 | 6,2 |

Tabelle 1 (fortgesetzt

| Beispiele | 7 | 8 | 9 |
|---|---|---|---|
| Al$_2$O$_3$ | 19,35 | 26,20 | 30,71 |

(fortgesetzt)

| Beispiele | 7 | 8 | 9 |
|---|---|---|---|
| As$_2$O$_3$ | | | 0,50 |
| BaO | | | |
| CaO | 0,20 | 2,44 | |
| Fe$_2$O$_3$ | 0,010 | | |
| K$_2$O | 0,50 | | 6,13 |
| Li$_2$O | 4,50 | 4,32 | |
| MgO | 0,50 | 0,25 | |
| Na$_2$O | 0,50 | 0,51 | 12,36 |
| P$_2$O$_5$ | | | |
| SiO$_2$ | 68,50 | 59,20 | 41,25 |
| SnO$_2$ | 1,50 | 0,47 | |
| SrO | 0,50 | | |
| TiO$_2$ | | | 7,37 |
| ZnO | 1,50 | 1,81 | |
| ZrO$_2$ | 2,50 | 4,16 | 1,67 |
| SUMME | 100,06 | 99,46 | 100,00 |
| SnO$_2$/(TiO$_2$+ZrO$_2$) | 0,60 | 0,11 | 0,00 |
| T$_g$ | 700°C | | |
| Keramisierung | 740°C/3h+ 850°C/30 min | 760°C/60 min.+ 980°C/8min. | 850°C/4h + 900°C/30 min. |
| Hauptkristallphasen | KMK | KMK | Nephelin, Rutil (tr) |
| relativer Anteil KMK | 98,3 | 96,5 | - |
| Kristallitgröße KMK (nm) | 72 | 81 | Nephelin = 62nm |
| Transmission D=0,8mm | n.b. | | |
| $\tau_{vis}$ (C/2) 0,7mm | 90,2 | 82,8 | 82,2 |
| YI (Norm.L. C Yellow.) | | | |
| Normlichtart C | | | |
| L* | 96,1 | 92,9 | 92,7 |
| a* | -0,2 | 0,1 | -1,3 |
| b* | 1,2 | 2,9 | 8,5 |
| C* | 1,2 | 2,9 | 8,6 |

Für Vorspannversuche wurden keramisierte Glaskeramikscheiben mit einer Dicke von 0,7 mm in verschiedenen Salzbädern vorgespannt. Tabelle 2 zeigt die Veränderung der kristallographischen Daten beim Vorspannen einer erfindungsgemäßen Glaskeramik.

Tabelle 2

| | a (Å) | C (Å) | V (Å³) | ΔV |
|---|---|---|---|---|
| Literaturwert $Li_{0.75}Al_{0.75}Si_{2.25}O_6$ | 7,505 | 9,070 | 510,91 | |
| nicht vorgespannt | 7,499 | 9,099 | 511,64 | 0 |
| 100 % $KNO_3$ | 7,501 | 9,199 | 517,56 | 1,16% |
| | 7,443 | 9,687 | 536,59 | 4,88% |
| 80 % $KNO_3$ + 20 %$NaNO_3$ + 100 %$KNO_3$ | 7,499 | 9,261 | 520,76 | 1,78% |
| 99 % $KNO_3$ + 1 %$NaNO_3$ | 7,497 | 9,275 | 521,35 | 1,90% |
| 95 % $KNO_3$ + 5 %$NaNO_3$ | 7,502 | 9,295 | 523,09 | 2,24% |
| 90 % $KNO_3$ + 10 %$NaNO_3$ | 7,503 | 9,303 | 523,77 | 2,37% |

(Literaturwert ICDD-PDF# 00-035-0794)

Die Probe enthält nach der Keramisierung Keatit-Mischkristalle als Hauptkristallphase (96 % Keatit Mischkristall, 3 % $ZrTiO_4$). Nach dem Vorspannen (bei Temperaturen von 420-440°C für 7,5-18 h) zeigten alle Proben unabhängig vom gewählten Salzbad eine Vergrößerung der Elementarzelle in der oberflächennahen Schicht von mehr als 1 % gegenüber der nicht vorgespannten Probe. Die Probe, die in 100 % $KNO_3$ vorgespannt wurde, zeigte in der oberflächennahen Schicht sogar die Bildung von zwei verschiedenen Keatit-Mischkristallstrukturen, die beide gegenüber dem nichtvorgespannten Keatit ein größeres Elementarzellenvolumen aufweisen. Alle 0,7mm Proben, die eine Steigerung der Set drop Festigkeit aufwiesen, zeigten zudem eine DoCL von 140 μm bzw. 135μm auf. Die Werte für CS 30 lagen zwischen 150 MPa und 360 MPa.

Proben mit einer Zusammensetzung gemäß Beispiel 9 (nicht gemäß der Erfindung) wurden in analoger Weise hergestellt, wie in Tabelle 1 Bsp. 9 angegeben keramisiert und vorgespannt. Sie enthalten als Hauptkristallphase Nephelin ($(Na,K)[AlSiO_4]$) sowie Spuren von Rutil. Eine XRD Messung ergab für den Nephelin (hexagonale Struktur) folgende kristallographische Daten a=10.026 (5) Å, c=8.372(5) Å, Volumen der Elementarzelle: V=728.8(10) Å³. Nach dem Vorspannen (100%$KNO_3$, 8h bei 500°C) ergab der Kalsilit (Kalium-substituiertes Endglied der Nephelin-Mischkristallreihe, $KAlSiO_4$): a=5.170(5) Å, c=8.730(5) Å. Zum direkten Vergleich muss hier aufgrund der unterschiedlichen Größe der Elementarzelle beider Strukturen die a-Gitterkonstante verdoppelt werden (damit dieselbe Anzahl an Formeleinheiten in der Elementarzelle ist). Damit ergibt sich für den Kalsilit ein Elementarzellvolumen von V=808.3(10) Å³, was einer Vergrößerung von ca. 10 % entspricht.

Vorspannbedingungen und damit erzielte Vorspannparameter sind für unterschiedliche Deckscheiben in der nachfolgenden Tabelle (Tabelle 3) aufgeführt.

Tabelle 3. Mittels SLP1000 und FSM 6000 bestimmte Stressprofilparameter von verschieden vorgespannten Deckscheiben umfassend Glaskeramik

| Probe | Dicke | Ionenaustausch | | $CS_0$ | K DoL | CS 30 | DoCL |
|---|---|---|---|---|---|---|---|
| | [mm] | Schritt 1 | Schritt 2 | [MPa] | [μm] | [MPa] | [μm] |
| 10 | 0,71 | 48h 490°C 100% $KNO_3$ | | | 57 | 245 | 57 |
| 11 | 0,71 | 2,5h 440°C 100% Na $NO_3$ | | | | 404 | 98 |
| 12 | 0,7 | 9h 440°C 100% $NaNO_3$ | | | | 404 | 140 |
| 13 | 0,71 | 4h 440°C 100% $KNO_3$ | | 1076 | 12,8 | | 12,8 |
| 14 | 0,71 | 15h 440°C 100% $KNO_3$ | | | 27,5 | | 27,5 |

(fortgesetzt)

| Probe | Dicke | Ionenaustausch | | $CS_0$ | K DoL | CS 30 | DoCL |
|---|---|---|---|---|---|---|---|
| | [mm] | Schritt 1 | Schritt 2 | [MPa] | [$\mu$m] | [MPa] | [$\mu$m] |
| 15 | 0,71 | 9h 440°C 99,5% $NaNO_3$ 0,5%$LiNO_3$ | | | | 313 | 127 |
| 16 | 0,71 | 9h 440°C 99% $NaNO_3$ 1%$LiNO_3$ | | | | 232 | 120 |
| 17 | 0,71 | 9h 440°C 98,5% $NaNO_3$ 1,5%$LiNO_3$ | | | | 165 | 117 |
| 18 | 0,51 | 2,5h 440°C 100% $NaNO_3$ | 1h 440°C 100%$KNO_3$ | 1086 | 7,7 | 238 | 98 |
| 19 | 0,51 | 2,5h 440°C 100% $NaNO_3$ | 4h 440°C 100%$KNO_3$ | 1091 | 14,1 | 78 | 86 |

CT steht hierbei für center tension, zentrale Spannung, und ist in MPa angegeben. Die "K DoL" ist die Tiefe der Druckspannung durch Kalium (sofern anwendbar) und wird in $\mu$m angegeben; $CS_0$ ist die Höhe der Druckspannung an der Oberfläche der Deckscheibe und wird in MPa angegeben; $CS_{30}$ ist die Druckspannung in einer Tiefe von 30 $\mu$m, gemessen von der Oberfläche der Deckscheibe (angegeben in MPa).

Eine gemischte Vorspannung durch Natrium und Lithium kann vorteilhaft sein, um das Bruchbild zu verbessern, also ein weniger feinkrümeliges Bruchbild zu erhalten.

Beschreibung der Zeichnungen

Fig. 1 zeigt die schematische und nicht maßstabsgetreue Darstellung einer Deckscheibe 1 nach Ausführungsformen der vorliegenden Offenbarung. Die Deckscheibe 1 ist vorliegend scheibenförmig oder plattenförmig in dem Sinne ausgebildet, dass ihre Dicke d (in Fig. 1 nicht bezeichnet) wenigstens eine Größenordnung kleiner ist als Länge I und Breite b der Deckscheibe 1. Die Deckscheibe 1 kann, wie dies beispielhaft in Fig. 1 dargestellt ist, eben bzw. plan vorliegen oder als gewölbte oder gebogene Scheibe. Denkbar sind allgemein auch Ausführungsformen, bei welchen die Deckscheibe lediglich im Randbereich eine kleine Krümmung aufweist. Die beiden Abmessungen Länge und Breite bestimmen die beiden Hauptflächen oder Seiten (teilweise auch "Oberflächen" genannt) der Deckscheibe 1.

Fig. 2 zeigt eine schematische und nicht maßstabsgetreue Schnittdarstellung eines einer Deckscheibe 1 nach Ausführungsformen dieser Offenbarung. Die Deckscheibe 1 weist zwei Seiten 10, 12 auf (diese Seiten können auch als "Oberflächen" oder "Hauptflächen" der Deckscheibe 1 bezeichnet werden), wobei die Seite 10 hier als Oberseite, die Seite 12 als Unterseite ausgebildet ist. Weiterhin ist die Dicke d der Deckscheibe 1 bezeichnet. Die Deckscheibe 1 weist eine zwischen den beiden Seiten 10, 12 angeordnete Schicht 101 auf, welche im Rahmen der vorliegenden Offenbarung auch als "oberflächennahe Schicht" bezeichnet wird. Die oberflächennahe Schicht 101 ist auf beiden Seiten der Deckscheibe 1 ausgebildet und kann gleich ausgebildet sein, also beispielsweise eine im Rahmen der Messgenauigkeit gleiche Dicke aufweisen. Es ist aber auch möglich und kann sogar bevorzugt sein, dass die Dicke der oberflächennahen Schicht 101, welche einer der beiden Seiten, beispielsweise der Seite 10 zugeordnet ist, eine andere Dicke aufweist als die oberflächennahe Schicht, welche der Seite 12 zugeordnet ist. Dies kann beispielsweise dann der Fall sein, wenn die chemische Vorspannung der Deckscheibe 1 so ausgeführt wurde, dass ein ungleicher Austausch erfolgt.

Zwischen den beiden oberflächennahen Schichten 101 liegt der Kern 102. Zwischen der oberflächennahen Schicht 101 und dem Kern 102 kann sich ein weiterer Bereich anschließen, welcher allerdings in Fig. 2 nicht bezeichnet ist, in welchem es zu einem Ionenaustausch gekommen ist, aber beispielsweise nichts zur Druckspannung beiträgt. Der Kern ist allgemein der Bereich minimaler Spannung der Deckscheibe 1. Die oberflächennahen Schichten 101 weisen demgegenüber eine höhere Spannung auf, insbesondere können sie unter Druckspannung stehen. Die Deckscheibe 1 umfasst allgemein eine silikatische Glaskeramik, wobei die Deckscheibe 1 allgemein eine Dicke d zwischen 0,1 mm und 2 mm aufweist. Eine bevorzugte Untergrenze der Dicke kann allgemein bei 0,4 mm liegen. Eine bevorzugte Obergrenze der Dicke kann allgemein bei 0,85 mm liegen. Der Lichttransmissionsgrad, $\tau_{vis}$, der Deckscheibe 1 beträgt nach einer Ausführungsform mehr als 80%, bevorzugt mehr als 85%, im Bereich von 380 nm bis 780 nm, vorzugsweise bestimmt für Dicken zwischen 0,1 mm und 2 mm, insbesondere vorzugsweise bei einer Dicke von 0,7 mm. Die Deckscheibe 1 liegt, durch eine chemische Vorspannung, die dazu führt, dass wenigstens in einer oberflächennahen Schicht 101 bzw. in den beiden oberflächennahen Schichten 101, insbesondere in einer Schicht von 20 $\mu$m bis 70 $\mu$m, bestimmt in einem rechten Winkel von einer der Seitenflächen 10, 12 der Deckscheibe 1 aus, eine Druckspannung vorliegt, als chemisch vorgespannte Deckscheibe vor, wobei das Spannungsprofil, vorzugsweise in einer Tiefe der Deckscheibe von mehr als 10 $\mu$m, wenigstens einen Wendepunkt aufweist. Vorzugsweise kann es sich bei der Kristallphase, welche von der Glaskeramik der Deckscheibe 1 umfasst ist, um eine silikatische Kristallphase handeln. Durch die chemische Vorspannung weist die Deckscheibe 1 eine CS von wenigstens 250 MPa und vorzugsweise höchstens 1500 MPa.

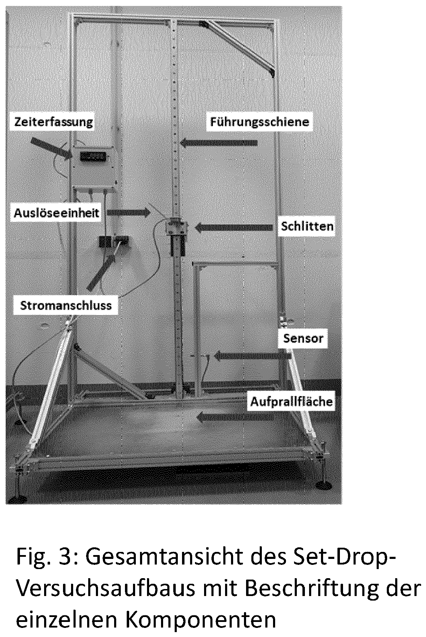

Fig. 3 bis 6 betreffen die Durchführung des sogenannten Set-Drop-Fests zur Bestimmung der Set-Drop-Festigkeit.

Der Set-Drop-Test wird dabei vorzugsweise wie folgt durchgeführt:

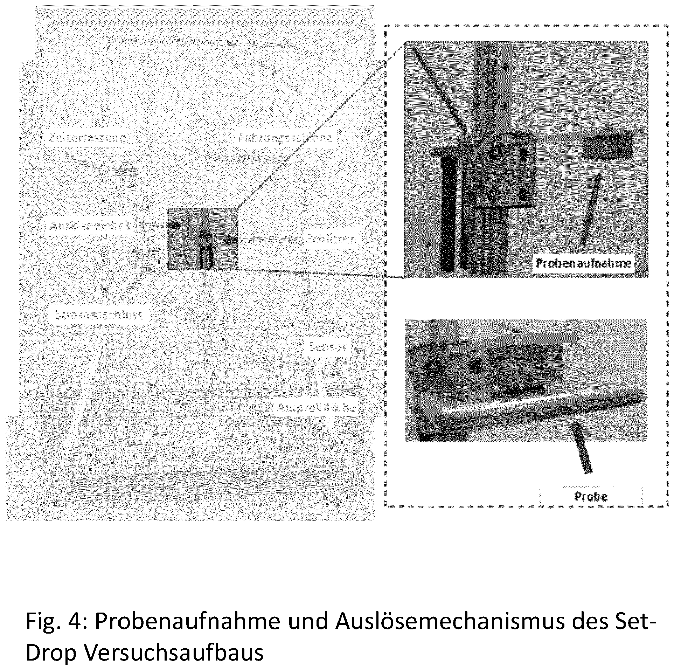

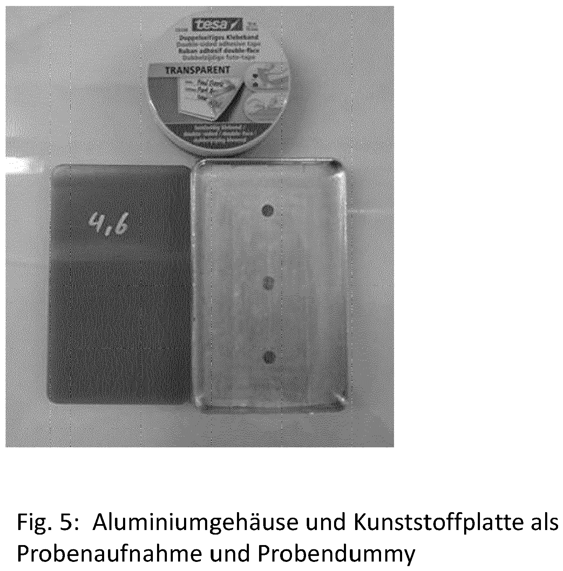

Eine Deckscheibe wird auf einer Probenaufnahme fixiert und aus kumulierenden Fallhöhen auf einen definierten Untergrund fallen gelassen. Eine Übersicht des Gesamtaufbaus ist in Figur 3 dargestellt. Die in der Fig. 5 im Set-Drop-Test verwendete Deckscheibe weist eine Länge von 99 mm und eine Breite von 59 mm auf und wird wie in Figur 4 dargestellt, magnetisch mit einem Probendummy in der Probenaufnahme fixiert. Für die in der vorliegenden Offenbarung geschilderten Untersuchungen wurden abweichend von der Probendarstellung in Fig. 4 allerdings Formate der Deckscheibe von 49,5 mm mal 49,5 mm verwendet, wobei der prinzipielle Aufbau der Testdurchführung in Fig. 3 bis 6 davon unbenommen ist, sich die Dummygewichte aber entsprechend reduzieren.

Zunächst wird dabei eine Kunststoffplatte mit Hilfe eines doppelseitigen Klebebandes in ein Metallgehäuse, welches Form und Gewicht einer Halterung für ein mobiles Endgerät, beispielsweise ein Smartphone, hat, geklebt. Es eignen sich hierbei beispielsweise Kunststoffplatten mit Dicken zwischen 4,35 mm und bis 4,6 mm (siehe Figur 5). Das Einkleben erfolgt bevorzugt mittels eines doppelseitigen Klebebandes, welches eine Dicke von etwa 100 $\mu$m (für Untersuchungen mit vorgespannten Deckscheiben umfassend Glas oder Glaskeramik) bzw. 295$\mu$m (für Untersuchungen mit nicht vorgespannten Deckscheiben umfassend Glas oder Glaskeramik) aufweist. Auf die Kunststoffplatte wird dann mittels eines doppelseitigen Klebebandes, vorzugsweise eines doppelseitigen Klebebandes mit der Dicke 295 $\mu$m, insbesondere ein doppelseitiges Klebeband der Marke tesa®, Produktnummer 05338, der zu testende scheibenförmige Glasartikel so aufgeklebt, dass zwischen der Oberkante des Gehäuses bzw. der Halterung und der Oberkante des Glasartikels ein Abstand zwischen 350 $\mu$m und 450 $\mu$m erhalten wird. Die Deckscheibe liegt höher als der Rahmen des Gehäuses und es darf kein direkter Kontakt zwischen Deckscheibe und Aluminiumgehäuse auftreten. Das so erhaltene "Set" mit einem Gewicht von 60,5 g (Deckglasformat 49,5 × 49,5 mm2) für Untersuchungen mit vorgespannten Gläsern oder Glaskeramiken) bzw. 37,5g (für Untersuchungen mit unvorgespannten Gläsern oder Glaskeramiken, welches den Einbau einer Deckscheibe in ein mobiles Endgerät nachempfindet und eine Art "Dummy" für ein reales mobiles Endgerät, hier insbesondere ein Smartphone, ist, wird anschließend auf eine Fläche der Größe DIN A4, die sogenannte Aufprallfläche, mit der Glasseite mit einer Anfangsgeschwindigkeit in vertikaler Richtung, somit Fallrichtung von Null nach unten fallen gelassen. Die Aufprallfläche wird dabei wie folgt hergestellt: Sandpapier mit einer entsprechenden Körnung, beispielsweise der Körnung 60 (#60), wird mittels eines doppelseitigen Klebebandes, beispielsweise eines Klebebandes der Dicke 100 $\mu$m für Untersuchungen mit vorgespannten Deckscheiben umfassend Glas oder Glaskeramik) bzw. 3 × 100$\mu$m (für Untersuchungen mit nicht vorgespannten Deckscheiben umfassend Glas oder Glaskeramik) auf eine Bodenplatte geklebt. Als Klebeband wurde Tesa (10m/15mm), transparent, doppelseitig, Produktnummer 05338, genutzt Die Körnung ist im Rahmen der vorliegenden Offenbarung definiert gemäß den Normen der Federation of European Producers of Abrasives (FEPA), Beispiele dafür siehe auch in DIN ISO 6344., insbesondere DIN ISO 6344-2:2000-04, Schleifmittel auf Unterlagen - Korngrößenanalyse - Teil 2: Bestimmung der Korngrößenverteilung der Makrokörnungen P 12 bis P 220 (ISO 6344-2:1998). Das Gewicht der Bodenplatte, die bei den vorliegend offenbarten Werten, eine Aluminiumunterlage ist, beläuft sich auf ca. 3 kg.

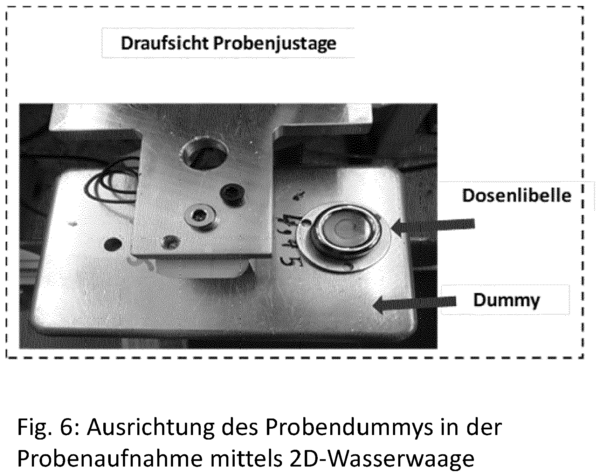

Die Bodenplatte muss fest sein und ist bevorzugt aus Aluminium oder alternativ auch aus Stahl ausgebildet. Das Sandpapier muss komplett mit Klebeband versehen und blasenfrei aufgeklebt sein. Die Aufprallfläche darf lediglich für fünf Fallversuche verwendet werden und ist nach dem fünften Fallversuch auszutauschen. Die Probe, also das erhaltene Set, wird in die Prüfvorrichtung eingesetzt und mittels einer 2D-Wasserwaage (Dosenlibelle) so ausgerichtet, dass das Set horizontal gelagert ist, wobei die Deckscheibe zum Boden, also in Richtung der Aufprallfläche, zeigt (siehe Figur 6). Die erste Fallhöhe beträgt 20 cm, tritt kein Bruch auf, wird die Fallhöhe in 10-cm-Schritten erhöht, bis ein Glasbruch eintritt. Die Bruchhöhe, der Bruchursprung sowie das Brucherscheinungsbild werden notiert. Der Test wird an 10 bis 15 Proben durchgeführt, und es wird ein Mittelwert gebildet.

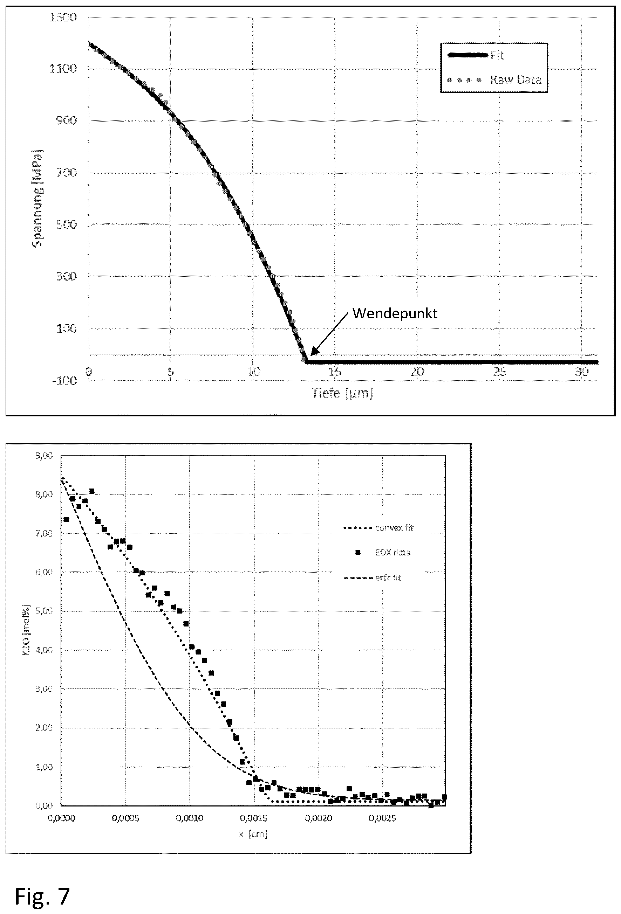

Fig. 7 zeigt im oberen Bereich ein Spannungsprofil und im unteren Bereich eine EDX-Kurve einer ersten Deckscheibe nach einer Ausführungsform der Offenbarung, bei welcher mittels Kaliumionen vorgespannt wurde. Die ungefähre Lage des Wendepunktes im Spannungsprofil ist im oberen Diagramm der Fig. 7 bezeichnet. Im unteren Diagramm von Fig. 7 ist der Verlauf der Kaliumoxid-Konzentration über die Tiefe der Deckscheibe (aufgetragen auf der x-Achse) zu sehen. Dargestellt ist neben den Messpunkten (gefülltes Quadrat) auch der "konvexe Fit" an diese Daten (gepunktete Linie), der deutlich den anomalen Verlauf der Konzentrationskurve (welcher sich bekanntermaßen in das Spannungsprofil übersetzt) zeigt. Zum Vergleich ist noch der "klassische" erwartete Verlauf eines Konzentrationsprofils gezeigt, welches üblicherweise durch eine komplementäre Fehlerfunktion beschrieben werden kann (gestrichelte Linie im unteren Diagramm von Fig. 7).

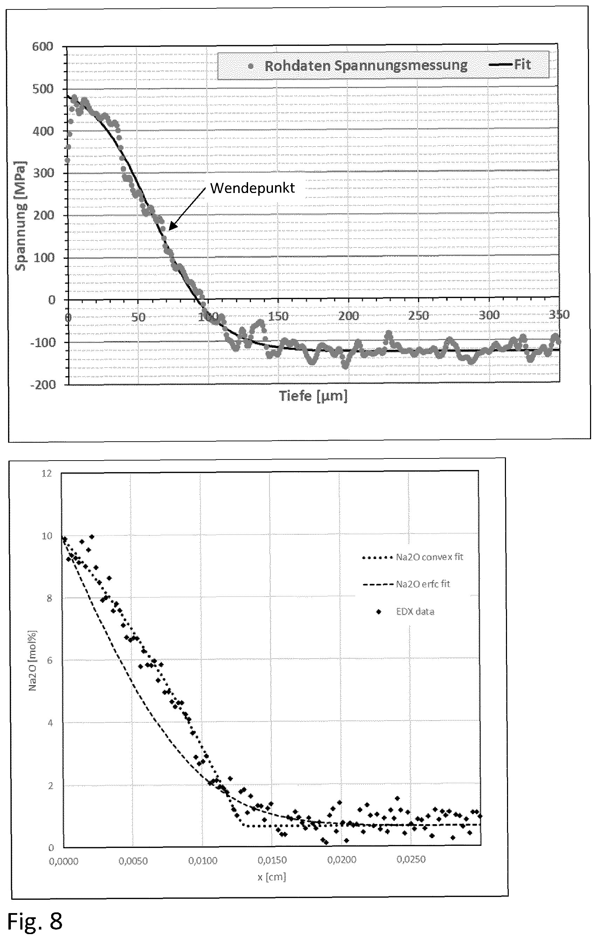

Fig. 8 zeigt im oberen Bereich ein Spannungsprofil und im unteren Bereich eine EDX-Kurve einer ersten Deckscheibe nach einer Ausführungsform der Offenbarung, bei welcher mittels Natriumionen vorgespannt wurde. Die ungefähre Lage des Wendepunktes im Spannungsprofil ist im oberen Diagramm der Fig. 8 bezeichnet. Im unteren Diagramm von Fig. 8 ist der Verlauf der Natriumoxid-Konzentration über die Tiefe der Deckscheibe (aufgetragen auf der x-Achse) zu sehen. Dargestellt ist neben den Messpunkten (gefülltes Quadrat) auch der "konvexe Fit" an diese Daten (gepunktete Linie), der deutlich den anomalen Verlauf der Konzentrationskurve (welcher sich bekanntermaßen in das Spannungsprofil übersetzt) zeigt. Zum Vergleich ist noch der "klassische" erwartete Verlauf eines Konzentrationsprofils gezeigt, welches üblicherweise durch eine komplementäre Fehlerfunktion beschrieben werden kann (gestrichelte Linie im unteren Diagramm von Fig. 8).

Fig. 9 zeigt schließlich ein Spannungsprofil, welches nach einem zweifachen Ionenaustausch erhalten wurde. Das Spannungsprofil weist drei Wendepunkte auf, welche in den Diagrammen der Fig. 9 näherungsweise angegeben sind.

In den Fig. 7 bis 9 ist wenigstens ein Wendepunkt bei einer Tiefe der Deckscheibe von wenigstens 10 $\mu$m oder mehr vom Spannungsprofil umfasst.

Fig. 10 zeigt schließlich einen Vergleich der Set-Drop-Festigkeit unterschiedlicher Deckscheiben. Mit 2 bezeichnet sind hier die Ergebnisse, welche an Fallhöhen für chemisch vorgespanntes Glas des Standes der Technik erhalten werden. Mit 3 bezeichnet sind Ergebnisse für eine Deckscheibe nach einer ersten Ausführungsform, welche 14 h bei 440°C in einem reinen Natriumbad (100% NaNO$_3$) vorgespannt wurde. Schließlich ist mit 4 bezeichnet das Ergebnis für eine Deckscheibe nach einer weiteren Ausführungsform, welche bei 440°C für neun Stunden in einem reinen Natriumtauschbad (100% NaNO$_3$) vorgespannt wurde. Die Ergebnisse des Set-Drop-Tests sind auch in der nachfolgenden Tabelle zusammengestellt. Die Fallhöhen sind jeweils in cm angegeben.

|  | Proben 2 | Proben 3 | Proben 4 |
|---|---|---|---|
|  | 20 | 110 | 180 |
|  | 50 | 170 | 180 |
|  | 30 | 160 | 180 |
|  | 20 | 150 | 160 |
|  | 50 | 180 | 180 |
|  | 60 | 140 | 180 |
|  | 30 | 180 | 180 |
|  | 50 | 100 | 150 |
|  | 60 | 140 | 150 |
|  | 70 | 180 | 180 |
|  | 40 | 150 |  |
|  | 20 | 180 |  |
| MW | 42 | 153 | 172 |
| Median | 45 | 155 | 180 |
| Min | 20 | 100 | 150 |
| Max | 70 | 180 | 180 |

Die Proben 2 bis 4 wurden dabei mittels den nachfolgenden Austauschbedingungen erhalten:

| Probe Nr. | Dicke [mm] | Austausch 1 | Austausch 2 | $CS_0$ [MPa] | CS 30 [MPa] | DoCL [$\mu$m)] |
|---|---|---|---|---|---|---|
| 2 | 0,7 | 7,5h 20/80% K/NaNO$_3$ 410°C | 3h 100% KNO$_3$ 395°C | 840 | 134 | 150 |
| 3 | 0,7 | 9h; 440C; 100%NaNO$_3$ | - | 536 | 404 | 140 |
| 4 | 0,7 | 14h; 440°C; 100%NaNO$_3$ | - | 425 | 315 | 135 |

In Fig. 11 ist ein beispielhaftes Spannungsprofil einer Deckscheibe gezeigt, welche dem Stand der Technik entspricht und deren Kurvenverlauf im oberflächennahen Bereich bzw. bis zur DoCL mittels einer komplementären Fehlerfunktion oder durch eine Parabel angenähert werden kann. Mit 102 ist der Kern gekennzeichnet, der Bereich, in welchem die Spannung einen minimalen Wert annimmt.

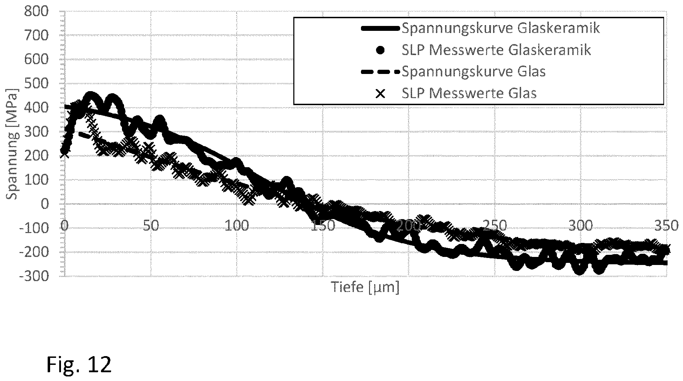

Fig. 12 zeigt exemplarisch den Verlauf der Spannungsprofile für ein Deckscheibe umfassend eine silikatische Glaskeramik nach einer Ausführungsform sowie für eine Deckscheibe umfassend ein silikatisches Glas einer chemischen Zusammensetzung entsprechend derjenigen der Glaskeramik. Fig. 12 zeigt dabei den Verlauf der mittels dem Messgerät SLP ermittelten Kurve sowie die jeweils geglättete Spannungskurve in Abhängigkeit von der Tiefe der Deckscheibe. Wie man erkennt, ist die Vorspannung in der Deckscheibe nach einer Ausführungsform, umfassend Glaskeramik, insbesondere im oberflächennahen Bereich der Deckscheibe deutlich größer als in der Deckscheibe aus bzw. umfassend Glas, entsprechend der effizienteren Vorspannung, also dem effizienteren Spannungsaufbau durch Ionenaustausch, in der Glaskeramik. Insbesondere ist im dargestellten Beispiel die Druckspannung in der Glaskeramik größer als im Glas, und zwar fast in der gesamten Druckspannungszone (aufgrund der messtechnisch bedingten Ungenauigkeiten ist nicht ganz klar erkennbar, ob sich die Messkurven der Spannungsprofile vor dem Nulldurchgang der Spannung schneiden oder erst danach).Entsprechend ist in diesem Fall auch die letztlich erzielte Zugspannung (CT) in der Glaskeramik größer als im Glas.

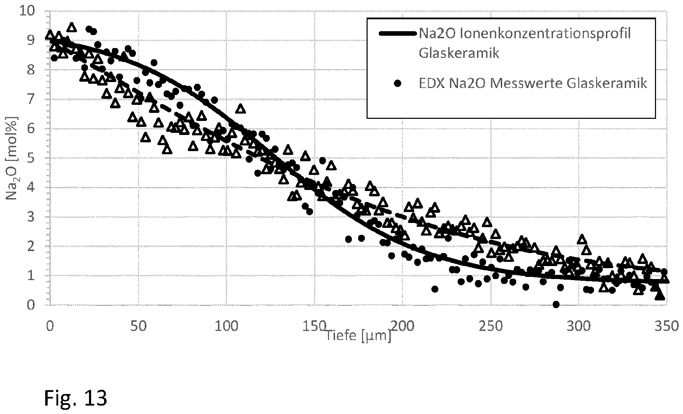

Fig. 13 kann man den Vergleich der Natriumoxid-Konzentration in einem Glas und in einer Glaskeramik bei chemisch gleicher Zusammensetzung von Glas und Glaskeramik sowie einem unterschiedlichen Vorspannprozess mit Natrium als "vorspannendem Ion" entnehmen. Die entsprechenden Spannungskurven zu dem hier untersuchten Deckscheiben entsprechen denen, die in Fig. 12 dargestellt sind. Wie man sieht, liegt die Konzentration von Natriumoxid bis zu einer gewissen Tiefe - im Beispiel ca. 140 $\mu$m - stets über dem der Konzentration im Glas. Dies entspricht in etwa der DoCL der Probe nach Fig. 12. Auch für den Konzentrationsverlauf findet sich in der Glaskeramik im Übrigen der charakteristische Kurvenverlauf mit wenigstens einem Wendepunkt (oder einen sozusagen "konvexen" Verlauf).

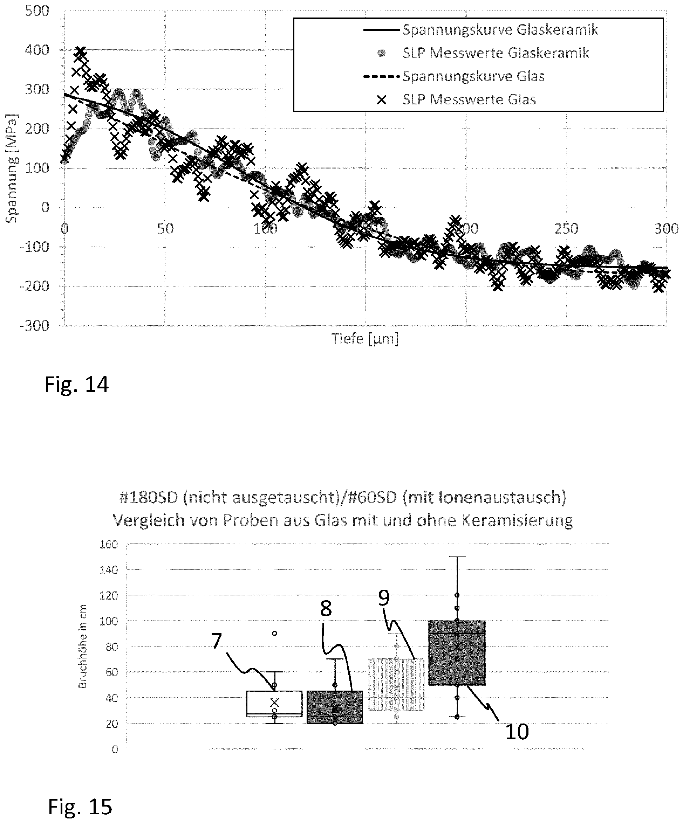

Der Vorteil des Ionenaustauschs bei Deckscheiben nach Ausführungsformen im Vergleich zu Deckscheiben aus oder umfassend ein Glas gleicher chemischer Zusammensetzung zeigt sich auch in den Proben, für welche in Fig. 14 die Spannungskurven bzw. die Messwerte mittels SLP aufgeführt sind. Der Ionenaustausch wurde hierbei so durchgeführt, dass für die Deckscheibe umfassend eine silikatische Glaskeramik nach einer Ausführungsform und für die Deckscheibe umfassend das entsprechende silikatische Glas jeweils die gleichen Werte für CS, also der Druckspannung an der Oberfläche der Deckscheibe, sowie für die DoCL erhalten werden.

In Fig. 15 sind für diese beiden Proben die Werte im sogenannten Set-Drop-Test dargestellt, zusammen mit denjenigen Ergebnissen, welche für nicht-vorgespannte Proben erhalten wurden (a, b in Fig. 15). 7 und 8 bezeichnen dabei die Werte, die für Probengesamtheiten umfassend Deckscheiben umfassend ein nicht-vorgespanntes silikatisches Glas (7) bzw. umfassend eine nicht vorgespannte silikatische Glaskeramik mit einem zum Glas der Proben nach 7 entsprechenden chemischen Zusammensetzung (8) erhalten wurden. Wie man sieht, sind die entsprechenden Fall- bzw. Bruchhöhen mit #180 Sandpapier für Probengesamtheiten 7 bzw. 8 mit 36,3 cm bzw. 31,3 cm (arithmetisches Mittel) bzw. 27,5 cm und 25 cm (Median) vergleichbar. Insbesondere fällt hier auf, dass die Werte für die nicht-vorgespannte Glaskeramik nicht besser sind als für das nicht vorgespannte Glas.

Das Bild ändert sich jedoch, wenn die Werte im #60 Set-Drop-Test für die entsprechenden vorgespannten Deckscheiben ermittelt werden, wobei 9 die Proben der Deckscheiben umfassend das vorgespannte silikatische Glas und 10 die Werte der Proben der Deckscheiben umfassend die korrespondierende silikatische Glaskeramik zeigen. Wie ausgeführt, sind hier die Spannungswerte (CS, DoCL) hier im Rahmen der Messgenauigkeit identisch (siehe Fig. 14). Es zeigt sich, dass hier für die Deckscheiben nach Ausführungsformen, also umfassend eine silikatische Glaskeramik, wobei das Spannungsprofil, wie man ebenfalls Fig. 14 entnehmen kann, ja wenigstens einen Wendepunkt aufweist, deutlich vorteilhafter sind. Der Spannungsaufbau durch Ionenaustausch erfolgt also in die Deckscheibe nach Ausführungsformen effizienter und führt zu besseren Ergebnissen in für die Anwendung relevanten Tests.

Die Fig. 15 zugrundeliegenden Werte sind auch in der folgenden Tabelle aufgelistet:

| Probe Nr. | Nicht vorgespanntes Glas | Nicht vorgespannte Glaskeramik | Vorgespanntes Glas | Vorgespannte Glaskeramik |
|---|---|---|---|---|
| 1 | 90 | 20 | 25 | 90 |
| 2 | 25 | 25 | 20 | 70 |
| 3 | 25 | 25 | 40 | 50 |
| 4 | 25 | 70 | 70 | 25 |
| 5 | 30 | 25 | 40 | 100 |
| 6 | 25 | 30 | 30 | 70 |
| 7 | 30 | 50 | 30 | 90 |
| 8 | 30 | 20 | 60 | 25 |
| 9 | 20 | 20 | 80 | 120 |
| 10 | 25 | 50 | 70 | 40 |
| 11 | 60 | 20 | 50 | 50 |
| 12 | 50 | 20 | 25 | 110 |
| 13 | | | 40 | 100 |
| 14 | | | 30 | 150 |
| 15 | | | 90 | 100 |
| **MW** | **36,3** | **31,3** | **46,7** | **79,3** |
| **Median** | **27,5** | **25,0** | **40,0** | **90,0** |

Hierbei sind alle Werte für die Fallhöhen in Zentimetern (cm) angegeben.

<u>Bezugszeichenliste</u>

| | |
|---|---|
| 1 | Deckscheibe |
| 10, 12 | Seiten der Deckscheibe |
| 101 | Oberflächennahe Schicht der Deckscheibe |
| 102 | Kern |
| d | Dicke der Deckscheibe |
| l | Länge der Deckscheibe |
| b | Breite der Deckscheibe |
| 7, 8, 9, 10 | Ergebnisse von Set-Drop-Tests für unterschiedliche Probengesamtheiten |
| 6 | Vorspannprofil eines Vergleichsbeispiels |

**Patentansprüche**

1. Deckscheibe mit einer Dicke zwischen 0,1 mm und 2 mm, umfassend eine silikatische Glaskeramik, wobei die silikatische Glaskeramik als Hauptkristallphase Keatitmischkristall umfasst, wobei die Deckscheibe chemisch vorgespannt vorliegt, aufweisend eine Oberflächendruckspannung von wenigstens 250 MPa und vorzugsweise höchstens 1500 MPa, wobei das Spannungsprofil, vorzugsweise in einer Tiefe der Deckscheibe von mehr als 10 $\mu$m, wenigstens einen Wendepunkt aufweist, wobei die Deckscheibe einen Lichttransmissionsgrad, $\tau_{vis}$, von mehr als 80%, im Bereich von 380 bis 780 nm, bestimmt für Dicken von 0,4 mm bis 0,85 mm, vorzugsweise bei einer Dicke von 0,7 mm, aufweist, wobei die Glaskeramik $SnO_2$, $TiO_2$ und/oder $ZrO_2$ umfasst, **gekennzeichnet dadurch, dass** für die Komponenten $SnO_2$, $ZrO_2$ und $TiO_2$ gilt:

$$0{,}01 \leq SnO_2/(ZrO_2+TiO_2) < 0{,}7.$$

2. Deckscheibe nach Anspruch 1, wobei die Deckscheibe einen Lichttransmissionsgrad, $\tau_{vis}$, von mehr als 85%, im Bereich von 380 nm bis 780 nm, bestimmt für Dicken von 0,4 mm bis 0,85 mm, vorzugsweise bei einer Dicke von 0,7 mm, aufweist.

3. Deckscheibe nach einem der Ansprüche 1 oder 2, wobei die Glaskeramik als Lithium-Aluminium-Silikatglaskeramik ausgebildet ist und die Kristallphase als Keatit-Mischkristall.

4. Deckscheibe nach einem der Ansprüche 1 bis 3, wobei die Glaskeramik folgende Komponenten in Gew.-% auf Oxidbasis umfasst:

| | |
|---|---|
| $SiO_2$ | 55-75, bevorzugt 62-72 |
| $Al_2O_3$ | 18-27, bevorzugt 18-23 |
| $Li_2O$ | 2,8-5, bevorzugt 3-5. |

5. Deckscheibe nach einem der Ansprüche 1 bis 4, wobei die Glaskeramik folgende Komponenten in Gew.-% auf Oxidbasis umfasst:

| | |
|---|---|
| $SiO_2$ | 55-75, bevorzugt 62-72 |
| $Al_2O_3$ | 18-27 |
| $Li_2O$ | 2,8-5, bevorzugt 3-5 |
| $Na_2O$ | 0-4, bevorzugt 0-2 |
| $K_2O$ | 0-4, bevorzugt 0-2 |
| MgO | 0-8, bevorzugt 0-4 |
| CaO | 0-4, bevorzugt 0-2 |
| SrO | 0-4, bevorzugt 0-2 |
| BaO | 0-4, bevorzugt 0-2 |
| ZnO | 0-6, bevorzugt 0-2 |
| $TiO_2$ | 0-4, bevorzugt 0-3 |
| $ZrO_2$ | 0-5, bevorzugt 1,2-4 |
| $B_2O_3$ | 0-2, bevorzugt 0-0,1 |
| $Fe_2O_3$ | 0,0001 - 0,1, bevorzugt 0,0001 - 0,02 |
| $SnO_2$ | > 0-2, bevorzugt 0,05-1,6 |

wobei vorzugsweise für die Summe der Komponenten $TiO_2$ und $ZrO_2$ gilt:
0 kleiner als ($TiO_2+ZrO_2$) kleiner als 9,5 %, bevorzugt 1,2 kleiner als ($TiO_2+ZrO_2$) kleiner als 9,5 %.

6. Deckscheibe nach einem der Ansprüche 1 bis 5, **gekennzeichnet dadurch, dass** die sharp impact Festigkeit, bestimmt in einem set-drop-Test, zwischen wenigstens 120 cm und bis zu 200 cm Fallhöhe liegt.

7. Deckscheibe nach einem der Ansprüche 1 bis 6, wobei die Deckscheibe als mit Natriumionen vorgespannte Deckscheibe vorliegt und/oder wobei die Deckscheibe als mit Kaliumionen vorgespannt Deckscheibe vorliegt.

8. Deckscheibe nach einem der Ansprüche 1 bis 7, wobei die Glaskeramik der Deckscheibe kein Lithiummetasilikat als Kristallphase umfasst.

9. Deckscheibe nach einem der Ansprüche 1 bis 8, **gekennzeichnet durch** einen β-Wert, bestimmt nach der Formel

$$\beta(x) = \frac{CS(x) + CT}{c(x)_{Ion} - c(Bulk)_{Ion}} \times \frac{1-v}{E}$$

wobei x die Tiefe der Deckscheibe, CS die Druckvorspannung in dieser Tiefe, CT die maximale Zugspannung (center tension), $c(x)_{Ion}$ die Konzentration des zur Vorspannung verwendeten Ions $c(Bulk)_{Ion}$ die Konzentration des zur Vorspannung verwendeten Ions im Bulk, v die Poissonzahl und E der E-Modul der Glaskeramik ist, wobei vorzugsweise das betrachtete und zur Vorspannung verwendete Ion das Natrium-Ion ist, und wobei der β-Wertzwischen 3 * 10$^{-4}$/mol bis 9 * 10$^{-4}$/mol, beispielsweise zwischen 4 * 10$^{-4}$/mol und 8 * 10$^{-4}$/mol liegt.

**10.** Verfahren zum Herstellen einer Deckscheibe nach einem der Ansprüche 1 bis 9, umfassend die Schritte:

- Herstellen eines silikatischen Grünglases durch einen Schmelzprozess und eine anschließende Heißformgebung
- Temperaturbehandlung des silikatischen Grünglases, wobei mindestens ein Keimbildungsschritt im Temperaturbereich von 650°C-850°C, vorzugsweise von 690°C-850°C, für eine Dauer von 5 min. bis 60 h, vorzugsweise bis 8 h, besonders bevorzugt 30 min. bis 2 h und mindestens ein Keramisierungsschritt im Temperaturbereich von 700°C-1100°C, vorzugsweise von 780°C-1100°C, für eine Dauer von 3 min. bis 120 h, vorzugsweise bis 60 h, bevorzugt 3 min. bis 8 h stattfindet
- Durchführen wenigstens eines Ionenaustauschs in einem Tauschbad mit einer Zusammensetzung von 100 Gew.-% bis 0 Gew.-% $KNO_3$ und/oder 0 Gew.-% bis 99,9 Gew.-% $NaNO_3$ und 0 Gew.-% -5 Gew.-% $LiNO_3$ bei einer Temperatur des Tauschbads zwischen 360°C und 500°C und einer Dauer zwischen 2 Stunden und 50 Stunden zur Anwendung kommen.

**11.** Verfahren nach Anspruch 10, wobei nur ein Ionenaustausch erfolgt und wobei das Tauschband vorzugsweise $NaNO_3$ und gegebenenfalls bis 0,1 Gew.-% $LiNO_3$ umfasst oder $KNO_3$ mit einer Reinheit von 99,9%, bezogen auf das Gewicht, umfasst.

**12.** Verwendung einer Deckscheibe nach einem der Ansprüche 1 bis 9 in elektronischen Geräten, insbesondere in elektronischen Anzeigegeräten, insbesondere in mobilen elektronischen Anzeigegeräten, beispielsweise in mobile touch panels und/oder mobilen digitalen Anzeigegeräten wie Smartphones oder Smartwatches.

**13.** Anzeigegerät, insbesondere digitales Anzeigegerät, umfassend wenigstens eine Deckscheibe nach einem der Ansprüche 1 bis 9

**Claims**

**1.** A cover pane having a thickness between 0.1 mm and 2 mm, comprising a silicate glass ceramic, said silicate glass ceramic comprising keatite solid solution as the main crystal phase;

wherein the cover pane is provided in a chemically toughened state, exhibiting a surface compressive stress of at least 250 MPa and preferably at most 1500 MPa, wherein the stress profile has at least one inflection point, preferably at a depth of the cover pane of more than 10 $\mu$m;
wherein the cover pane exhibits a light transmittance, $\tau_{vis}$, of more than 80 % in the range from 380 to 780 nm, determined for thicknesses from 0.4 mm to 0.85 mm, preferably at a thickness of 0.7 mm;
wherein the glass ceramic comprises $SnO_2$, $TiO_2$ and/or $ZrO_2$;
**characterized in that** the following holds true for the components $SnO_2$, $ZrO_2$ and $TiO_2$:

$$0.01 \leq SnO_2 / (ZrO_2 + TiO_2) < 0.7.$$

**2.** The cover pane according to claim 1, wherein the cover pane exhibits a light transmittance, $\tau_{vis}$, of more than 85 % in the range from 380 nm to 780 nm, determined for thicknesses from 0.4 mm to 0.85 mm, preferably at a thickness of 0.7 mm.

**3.** The cover pane according to any one of claims 1 or 2, wherein the glass ceramic is in the form of a lithium aluminum silicate glass ceramic and the crystal phase is keatite solid solution.

4. The cover pane according to any one of claims 1 to 3, wherein the glass ceramic comprises the following components, in wt%, on an oxide basis:

| | |
|---|---|
| $SiO_2$ | 55 - 75, preferably 62 - 72, |
| $Al_2O_3$ | 18 - 27, preferably 18 - 23, |
| $Li_2O$ | 2.8 - 5, preferably 3 - 5. |

5. The cover pane according to any one of claims 1 to 4, wherein the glass ceramic comprises the following components, in wt%, on an oxide basis:

| | |
|---|---|
| $SiO_2$ | 55 - 75, preferably 62 - 72, |
| $Al_2O_3$ | 18 - 27, |
| $Li_2O$ | 2.8 - 5, preferably 3 - 5, |
| $Na_2O$ | 0 - 4, preferably 0 - 2, |
| $K_2O$ | 0- 4, preferably 0 - 2, |
| $MgO$ | 0 - 8, preferably 0 - 4, |
| $CaO$ | 0 - 4, preferably 0 - 2, |
| $SrO$ | 0 - 4, preferably 0 - 2, |
| $BaO$ | 0 - 4, preferably 0 - 2, |
| $ZnO$ | 0 - 6, preferably 0 - 2, |
| $TiO_2$ | 0 - 4, preferably 0 - 3, |
| $ZrO_2$ | 0 - 5, preferably 1.2 - 4, |
| $B_2O_3$ | 0 - 2, preferably 0 - 0.1, |
| $Fe_2O_3$ | 0.0001 - 0.1, preferably 0.0001 - 0.02, |
| $SnO_2$ | > 0 - 2, preferably 0.05 - 1.6, |

wherein, preferably, the following holds true for the sum of the components $TiO_2$ and $ZrO_2$:

0 is smaller than $(TiO_2 + ZrO_2)$ is smaller than 9.5 %,
preferably 1.2 is smaller than $(TiO_2 + ZrO_2)$ is smaller than 9.5 %.

6. The cover pane according to any one of claims 1 to 5, **characterized in that** sharp impact strength as determined in a set drop test corresponds to a drop height between at least 120 cm and up to 200 cm.

7. The cover pane according to any one of claims 1 to 6, wherein the cover pane is provided in the form of a cover pane toughened with sodium ions; and/or wherein the cover pane is provided in the form of a cover pane toughened with potassium ions.

8. The cover pane according to any one of claims 1 to 7, wherein the glass ceramic of the cover pane does not comprise any lithium metasilicate crystal phase.

9. The cover pane according to any one of claims 1 to 8, **characterized by** a β-value determined according to the formula

$$\beta(x) = \frac{CS(x) + CT}{c(x)_{ion} - c(bulk)_{ion}} \times \frac{1 - \nu}{E}$$

where $x$ is the depth in the cover pane, CS is the preliminary compressive stress at this depth, $CT$ is the maximum tensile stress (center tension), $c(x)_{ion}$ is the concentration of the ion used for toughening, $c(bulk)_{ion}$ is the concentration of the ion used for toughening in the bulk, $\nu$ is Poisson's ratio and E is the Young's modulus of the glass ceramic;
wherein, preferably, the ion considered and used for toughening is the sodium ion, and wherein the β-value

**EP 4 194 414 B1**

ranges between 3 * 10⁻⁴ /mol and 9 * 10⁻⁴ /mol, for example between 4 * 10⁻⁴ /mol and 8 * 10⁻⁴ /mol.

10. A method for producing a cover pane according to any one of claims 1 to 9, comprising the steps of:

- producing a silicate green glass by a melting process and subsequent hot forming;
- thermal treatment of the silicate green glass, involving at least one nucleation step in the temperature range of 650 °C - 850 °C, preferably 690 °C - 850 °C, for a duration of 5 min to 60 h, preferably up to 8 h, most preferably of 30 min up to 2 h, and at least one ceramization step in the temperature range of 700 °C - 1100 °C, preferably 780 °C - 1100 °C, for a duration of 3 min to 120 h, preferably up to 60 h, more preferably 3 min to 8 h;
- performing at least one ion exchange in an exchange bath that has a composition of 100 wt% to 0 wt% of $KNO_3$ and/or 0 wt% to 99.9 wt% of $NaNO_3$ and 0 wt% to 5 wt% of $LiNO_3$ at a temperature of the exchange bath between 360 °C and 500 °C and over a duration between 2 hours and 50 hours.

11. The method according to claim 10, wherein only a single ion exchange is performed and wherein the exchange bath preferably comprises $NaNO_3$ and optionally up to 0.1 wt% of $LiNO_3$, or comprises $KNO_3$ with a purity of 99.9 % by weight.

12. Use of a cover pane according to any one of claims 1 to 9 in electronic devices, in particular in electronic display devices, in particular in mobile electronic display devices, for example in mobile touch panels and/or mobile digital display devices such as smartphones or smartwatches.

13. A display device, in particular a digital display device, comprising at least one cover pane according to any one of claims 1 to 9.

**Revendications**

1. Plaque de recouvrement d'une épaisseur comprise entre 0,1 mm et 2 mm, comprenant une vitrocéramique silicatée, la vitrocéramique silicatée comportant du cristal mixte de kéatite en tant que phase cristalline principale, la plaque de recouvrement étant chimiquement précontrainte et présentant une contrainte de compression de surface d'au moins 250 MPA et de préférence d'au maximum 1 500 MPa, le profil de contrainte présentant au moins un point d'inflexion, de préférence à une profondeur de plus de 10 $\mu$m de la plaque de recouvrement, la plaque de recouvrement présentant un facteur de transmission lumineuse $\tau_{vis}$ de plus de 80 %, dans le domaine allant de 380 à 780 nm, destiné à des épaisseurs allant de 0,4 mm à 0,85 mm, de préférence à une épaisseur de 0,7 mm, la vitrocéramique comportant $SnO_2$, $TiO_2$ et/ou $ZrO_2$, **caractérisée en ce que** pour les constituants $SnO_2$, $ZrO_2$ et $TiO_2$ :

$$0,01 \leq SnO_2/(ZrO_2 + TiO_2) < 0,7.$$

2. Plaque de recouvrement selon la revendication 1, où la plaque de recouvrement présente un facteur de transmission lumineuse $\tau_{vis}$ de plus de 85 %, dans le domaine allant de 380 nm à 780 nm, destiné à des épaisseurs allant de 0,4 mm à 0,85 mm, de préférence à une épaisseur de 0,7 mm.

3. Plaque de recouvrement selon une des revendications 1 ou 2, dans laquelle la vitrocéramique est réalisée comme vitrocéramique au lithium-aluminium-silicate, et la phase cristalline comme cristal mixte de kéatite.

4. Plaque de recouvrement selon une des revendications 1 à 3, dans laquelle la vitrocéramique comprend les constituants suivants, en % en poids à base d'oxyde :

| | |
|---|---|
| $SiO_2$ | 55 à 75, de préférence 62 à 72 |
| $Al_2O_3$ | 18 à 27, de préférence 18 à 23 |
| $Li_2O$ | 2,8 à 5, de préférence 3 à 5. |

5. Plaque de recouvrement selon une des revendications 1 à 4, dans laquelle la vitrocéramique comprend les constituants suivants, en % en poids à base d'oxyde :

| SiO$_2$ | 55 à 75, de préférence 62 à 72 |
| Al$_2$O$_3$ | 18 à 27 |
| Li$_2$O | 2,8 à 5, de préférence 3 à 5 |
| Na$_2$O | 0 à 4, de préférence 0 à 2 |
| K$_2$O | 0 à 4, de préférence 0 à 2 |
| MgO | 0 à 8, de préférence 0 à 4 |
| CaO | 0 à 4, de préférence 0 à 2 |
| SrO | 0 à 4, de préférence 0 à 2 |
| BaO | 0 à 4, de préférence 0 à 2 |
| ZnO | 0 à 6, de préférence 0 à 2 |
| TiO$_2$ | 0 à 4, de préférence 0 à 3 |
| ZrO$_2$ | 0 à 5, de préférence 1,2 à 4 |
| B$_2$O$_3$ | 0 à 2, de préférence 0 à 0,1 |
| Fe$_2$O$_3$ | 0,0001 à 0,1, de préférence 0,0001 à 0,02 |
| SnO$_2$ | 0 à 2, de préférence 0,05 à 1,6 |

où on applique de préférence pour la somme des constituants TiO$_2$ et ZrO$_2$ : 0 inférieur à (TiO$_2$ + ZrO$_2$) inférieur à 9,5 %, de préférence 1,2 inférieur à (TiO$_2$ + ZrO$_2$) inférieur à 9,5 %.

**6.** Plaque de recouvrement selon une des revendications 1 à 5, **caractérisée en ce que** la résistance aux impacts forts (sharp impact), déterminée par un essai de chute « set-drop », est comprise entre au moins 120 cm et jusqu'à 200 cm de hauteur de chute.

**7.** Plaque de recouvrement selon une des revendications 1 à 6, où la plaque de recouvrement se présente sous la forme d'une plaque de recouvrement précontrainte avec des ions de sodium et/ou où la plaque de recouvrement se présente sous la forme d'une plaque de recouvrement précontrainte avec des ions de potassium.

**8.** Plaque de recouvrement selon une des revendications 1 à 7, dans laquelle la vitrocéramique de la plaque de recouvrement ne comporte pas de métasilicate de lithium en tant que phase cristalline.

**9.** Plaque de recouvrement selon une des revendications 1 à 8, **caractérisée en ce qu'**elle présente une valeur β déterminée suivant la formule

$$\beta(x) = \frac{CS(x) + CT}{c(x)_{Ion} - c(Bulk)_{Ion}} \times \frac{1-v}{E}$$

où x désigne la profondeur de la plaque de recouvrement, CS la précontrainte de compression à cette profondeur, CT la contrainte de traction maximale (center tension), c(x)$_{Ion}$ la concentration de l'ion utilisé pour la précontrainte, c(Bulk)$_{Ion}$ la concentration de l'ion utilisé pour la précontrainte dans le volume, v le coefficient de Poisson et E le module E de la vitrocéramique, où l'ion considéré et utilisé pour la précontrainte est de préférence l'ion de sodium, et la valeur β est comprise entre 3 * 10$^{-4}$/mol et 9 * 10$^{-4}$/mol, par exemple entre 4 * 10$^{-4}$/mol et 8 * 10$^{-4}$/mol.

**10.** Procédé de fabrication d'une plaque de recouvrement selon une des revendications 1 à 9, comprenant les étapes suivantes :

- fabrication d'un verre cru silicaté avec un procédé de fusion et un formage à chaud subséquent
- traitement thermique du verre cru silicaté, lors duquel au moins une étape de nucléation est réalisée dans la plage de températures allant de 650 °C à 850 °C, de préférence de 690 °C à 850 °C, pendant une durée allant de 5 min à 60 h, de préférence jusqu'à 8 h, et de manière particulièrement avantageuse de 30 min à 2 h, et au moins une étape de céramisation est réalisée dans la plage de températures allant de 700 °C à 1 100 °C, de préférence de 780 °C à 1 100 °C, pendant une durée allant de 3 min à 120 h, de préférence jusqu'à 60 h, et de manière particulièrement avantageuse de 3 min à 8 h

- réalisation d'au moins un échange d'ions dans un bain déchange ayant une composition de 100 % en poids à 0 % en poids de $KnO_3$ et/ou 0 % en poids à 99,9 % en poids de $NaNO_3$ et 0 % en poids à 5 % en poids de LiNOs, à une température du bain d'échange qui est comprise entre 360 °C et 500 °C, et avec une durée comprise entre 2 heures et 50 heures appliquées.

11. Procédé selon la revendication 10, selon lequel seul un échange d'ions est réalisé, et selon lequel le bain d'échange comporte de préférence $NaNO_3$ et, le cas échéant, jusqu'à 0,1 % en poids de LiNOs, ou comporte $KNO_3$ avec une pureté de 99,9 % rapporté au poids.

12. Utilisation d'une plaque de recouvrement selon une des revendications 1 à 9 dans des dispositifs électroniques, notamment dans des dispositifs d'affichage électroniques, en particulier dans des dispositifs d'affichage électroniques mobiles, par exemple dans des écrans tactiles mobiles et/ou des dispositifs d'affichage numériques mobiles, tels que des smartphones ou des montres connectées

13. Dispositif d'affichage, notamment dispositif d'affichage numérique, comprenant au moins une plaque de recouvrement selon une des revendications 1 à 9.

1

b

l

**Fig. 1**

1

10

101

d

12

102

**Fig. 2**

Fig. 3: Gesamtansicht des Set-Drop-Versuchsaufbaus mit Beschriftung der einzelnen Komponenten

Fig. 4: Probenaufnahme und Auslösemechanismus des Set-Drop Versuchsaufbaus

Fig. 5: Aluminiumgehäuse und Kunststoffplatte als Probenaufnahme und Probendummy

Fig. 6: Ausrichtung des Probendummys in der Probenaufnahme mittels 2D-Wasserwaage

Fig. 7

Fig. 8

Fig. 9

Set-Drop-Test bei Sandpapier #60 von 0,7mm Glasdeckscheibe zu 0,7mm Glaskeramikdeckscheibe

Fig. 10

Spannungsprofil eines Vergleichsbeispiels, gemessen mit SLP 1000

Fig. 11

Fig. 12

Fig. 13

Fig. 14

#180SD (nicht ausgetauscht)/#60SD (mit Ionenaustausch)
Vergleich von Proben aus Glas mit und ohne Keramisierung

Fig. 15

**EP 4 194 414 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2013171047 A1
- EP 2819966 B1
- US 20200002225 A1
- US 20100009154 A
- US 20210292225 A1